(19) Europäisches Patentamt
European Patent Office
Office européen des brevets

(11) **EP 4 665 053 A1**

(12) **EUROPEAN PATENT APPLICATION**
published in accordance with Art. 153(4) EPC

(43) Date of publication:
**17.12.2025  Bulletin 2025/51**

(21) Application number: **24755964.4**

(22) Date of filing: **30.01.2024**

(51) International Patent Classification (IPC):
**H04W 72/231** (2023.01)

(52) Cooperative Patent Classification (CPC):
**H04L 5/00; H04W 72/231**

(86) International application number:
**PCT/CN2024/074657**

(87) International publication number:
**WO 2024/169590 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **16.02.2023  CN 202310165651
21.08.2023  CN 202311058547**

(71) Applicant: **Huawei Technologies Co., Ltd.
Shenzhen, Guangdong 518129 (CN)**

(72) Inventors:
• **SUN, Huan
  Shenzhen, Guangdong 518129 (CN)**
• **LUO, Zhihu
  Shenzhen, Guangdong 518129 (CN)**
• **JIN, Zhe
  Shenzhen, Guangdong 518129 (CN)**
• **QU, Weilin
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS**

(57) Embodiments of this application disclose a communication method and apparatus. The method includes: receiving first indication information from a network device, where the first indication information indicates a first parameter configuration, the first parameter configuration is one of K parameter configurations, and K is a positive integer; and determining a time-frequency resource position of a first control resource set CORESET based on the first parameter configuration. According to embodiments of this application, signaling overheads can be reduced.

FIG. 15

**Description**

This application claims priority to Chinese Patent Application No. 202310165651.5, filed with the China National Intellectual Property Administration on February 16, 2023, and to Chinese Patent Application No. 202311058547.2, filed with the China National Intellectual Property Administration on August 21, 2023 and entitled "COMMUNICATION METHOD AND APPARATUS", which are incorporated herein by reference in their entireties.

TECHNICAL FIELD

This application relates to the field of communication technologies, and in particular, to a communication method and apparatus.

BACKGROUND

In the 3rd generation partnership project (3rd generation partnership project, 3GPP) Rel-18 meeting, it is proposed to implement new radio access technology (new radio access technology, NR) communication in a private network spectrum, for example, the 3.6 MHz spectrum of the frequency division duplex (frequency division duplex, FDD) frequency band of the European railway private network, and the 3 MHz spectrum of the European public safety network. When a subcarrier spacing (subcarrier spacing, SCS) is equal to 15 kHz, the 3 MHz private network spectrum can support only transmission of data of a maximum of 16 resource blocks (resource block, RB) in frequency domain. In this narrowband private network spectrum, a network may not be able to send a complete common control resource block, for example, a control resource set 0 (control resource set #0, CORESET #0). If an existing control channel element (control channel element, CCE)-resource element group (resource element group, REG) interleaved mapping relationship in a control resource set is reused, receiving performance of a physical downlink control channel (physical downlink control channel, PDCCH) may be degraded.

SUMMARY

Embodiments of this application provide a communication method and apparatus, to improve receiving performance of a PDCCH.

According to a first aspect, an embodiment of this application provides a communication method. The method may be performed by a terminal device or a chip in the terminal device. The method includes: receiving a physical downlink control channel PDCCH from a network device, where all control channel elements CCEs included in the PDCCH are within a first bandwidth range, the first bandwidth range is a transmission bandwidth supported by the network device, and the first bandwidth range is less than 24 resource blocks RBs; and obtaining downlink control information based on the PDCCH. In a narrowband private network spectrum, all the CCEs included in the PDCCH are within the first bandwidth range. In this way, the network device can send all the CCEs carrying the downlink control information, so that the terminal device can completely receive the downlink control information. Therefore, receiving performance of the PDCCH is improved.

In a possible design, the PDCCH corresponds to X CCEs, the X CCEs are X consecutive CCEs starting from a first CCE in a frequency increasing direction, and X is an aggregation level of the PDCCH. A correspondence between the PDCCH and the CCE is redefined, so that all the CCEs included in the PDCCH are within the first bandwidth range. In this way, the network device can send all the CCEs carrying the downlink control information, so that the terminal device can completely receive the downlink control information. Therefore, the receiving performance of the PDCCH is improved.

In another possible design, the PDCCH corresponds to X CCEs, the X CCEs are determined starting from a first CCE in ascending order of CCE numbers, the X CCEs do not include a CCE outside the first bandwidth range, and X is an aggregation level of the PDCCH. A correspondence between the PDCCH and the CCE is redefined, so that all the CCEs included in the PDCCH are within the first bandwidth range. In this way, the network device can send all the CCEs carrying the downlink control information, so that the terminal device can completely receive the downlink control information. Therefore, the receiving performance of the PDCCH is improved.

In another possible design, the PDCCH corresponds to at least one CCE combination, each of the at least one CCE combination includes X CCEs, the X CCEs are all within the first bandwidth range, and X is an aggregation level of the PDCCH. A correspondence between the PDCCH and the CCE is redefined, so that all the CCEs included in the PDCCH are within the first bandwidth range. In this way, the network device can send all the CCEs carrying the downlink control information, so that the terminal device can completely receive the downlink control information. Therefore, the receiving performance of the PDCCH is improved.

In another possible design, indication information is received from the network device, where the indication information indicates a manner of determining the PDCCH and the CCE. The correspondence between the PDCCH and the CCE is determined by using the indication information, to obtain the downlink control information from the CCE corresponding to the PDCCH. Therefore, receiving efficiency of the PDCCH is improved.

In another possible design, the indication information is determined based on a synchronization signal. For example, the terminal device determines the indication information based on a relative position between a received primary synchronization signal and a received secondary synchronization signal, so that signaling overheads are reduced. For another example, the terminal device determines the indication information based on a reserved cell identifier included in a received primary synchronization signal and a received secondary synchronization signal, so that signaling overheads can also be reduced. The reserved cell identifier is an identifier that is not allocated to an existing cell in a private network. The reserved cell identifier may be a single cell identifier, or may be a group of cell identifiers.

In another possible design, X is 4, 5, 7, or 8. For example, when the first bandwidth range is 16 RBs, a CORESET #0 may support X being equal to 5, and all five CCEs within the 16 RBs are included in one PDCCH. For another example, when the first bandwidth range is 15 RBs, a CORESET #0 may support X being equal to 7, and all seven CCEs in the 15 RBs are included in one PDCCH, so that receiving performance of the PDCCH is improved.

In another possible design, the physical downlink control channel PDCCH is included in a control resource set 0.

In another possible design, the first bandwidth range is determined based on two parameters: a quantity R of rows and a quantity C of columns that are of an interleaver corresponding to the control resource set 0. The first bandwidth range corresponds to a quantity of effective frequency domain RBs. Optionally, R=2 and C=4, or R=2 and C=3. When a quantity of time domain symbols occupied by the CORESET #0 is 3, it may be further determined based on R=2 and C=4 that a quantity of effective frequency domain RBs occupied by the CORESET #0 is 15 or 16, that is, the first bandwidth range is 15 RBs or 16 RBs. When a quantity of time domain symbols occupied by the CORESET #0 is 2, it may also be further determined based on R=2 and C=3 that a quantity of effective frequency domain RBs occupied by the CORESET #0 is 15 or 16, that is, the first bandwidth range is 15 RBs or 16 RBs.

According to a second aspect, an embodiment of this application provides a communication method. The method may be performed by a network device or a chip in the network device. The method includes: determining a physical downlink control channel PDCCH, where all control channel elements CCEs included in the PDCCH are within a first bandwidth range, the first bandwidth range is a transmission bandwidth supported by the network device, and the first bandwidth range is less than 24 resource blocks RBs; and sending the PDCCH to a terminal device, where the PDCCH carries downlink control information. In a narrowband private network spectrum, all the CCEs included in the PDCCH are within the first bandwidth range. In this way, the network device can send all the CCEs carrying the downlink control information, so that the terminal device can completely receive the downlink control information. Therefore, receiving performance of the PDCCH is improved.

In a possible design, the PDCCH corresponds to X CCEs, the X CCEs are X consecutive CCEs starting from a first CCE in a frequency increasing direction, and X is an aggregation level of the PDCCH. A correspondence between the PDCCH and the CCE is redefined, so that all the CCEs included in the PDCCH are within the first bandwidth range. In this way, the network device can send all the CCEs carrying the downlink control information, so that the terminal device can completely receive the downlink control information. Therefore, the receiving performance of the PDCCH is improved.

In another possible design, the PDCCH corresponds to X CCEs, the X CCEs are determined starting from a first CCE in ascending order of CCE numbers, the X CCEs do not include a CCE outside the first bandwidth range, and X is an aggregation level of the PDCCH. A correspondence between the PDCCH and the CCE is redefined, so that all the CCEs included in the PDCCH are within the first bandwidth range. In this way, the network device can send all the CCEs carrying the downlink control information, so that the terminal device can completely receive the downlink control information. Therefore, the receiving performance of the PDCCH is improved.

In another possible design, the PDCCH corresponds to at least one CCE combination, each of the at least one CCE combination includes X CCEs, the X CCEs are all within the first bandwidth range, and X is an aggregation level of the PDCCH. A correspondence between the PDCCH and the CCE is redefined, so that all the CCEs included in the PDCCH are within the first bandwidth range. In this way, the network device can send all the CCEs carrying the downlink control information, so that the terminal device can completely receive the downlink control information. Therefore, the receiving performance of the PDCCH is improved.

In another possible design, indication information is determined based on a synchronization signal. For example, the terminal device determines the indication information based on a relative position between a received primary synchronization signal and a received secondary synchronization signal, so that signaling overheads are reduced. For another example, the terminal device determines the indication information based on a reserved cell identifier included in a received primary synchronization signal and a received secondary synchronization signal, so that signaling overheads can also be reduced. The reserved cell identifier is an identifier that is not allocated to an existing cell in a private network. The reserved cell identifier may be a single cell identifier, or may be a group of cell identifiers.

In another possible design, X is 4, 5, 7, or 8. For example, when the first bandwidth range is 16 RBs, a CORESET #0 may support X being equal to 5, and all five CCEs within the 16 RBs are included in one PDCCH. For another example, when the first bandwidth range is 15 RBs, a CORESET #0 may support X being equal to 7, and all seven CCEs in the 15 RBs are included in one PDCCH, so that receiving performance of the PDCCH is improved.

In another possible design, the physical downlink control channel PDCCH is included in a control resource set 0.

In another possible design, the first bandwidth range is determined based on two parameters: a quantity R of rows and a quantity C of columns that are of an interleaver corresponding to the control resource set 0. The first bandwidth range corresponds to a quantity of effective frequency domain RBs. Optionally, R=2 and C=4, or R=2 and C=3. When a quantity of time domain symbols occupied by the CORESET #0 is 3, it may be further determined based on R=2 and C=4 that a quantity of effective frequency domain RBs occupied by the CORESET #0 is 15 or 16, that is, the first bandwidth range is 15 RBs or 16 RBs. When a quantity of time domain symbols occupied by the CORESET #0 is 2, it may also be further determined based on R=2 and C=3 that a quantity of effective frequency domain RBs occupied by the CORESET #0 is 15 or 16, that is, the first bandwidth range is 15 RBs or 16 RBs.

In another possible design, the quantity R of rows and the quantity C of columns of the interleaver are determined based on the first bandwidth range, to obtain a mapping relationship between REG bundling and the CCE based on the quantity R of rows and the quantity C of columns of the interleaver. The first bandwidth range corresponds to a quantity of effective frequency domain RBs. For example, when the quantity of time domain symbols occupied by the CORESET #0 is 3, and the quantity of effective frequency domain RBs is 15 or 16, it may be further determined based on the quantity R of rows=2 that C=4. For another example, when the quantity of time domain symbols occupied by the CORESET #0 is 2, and the quantity of effective frequency domain RBs is 15 or 16, it may be further determined based on the quantity R of rows=2 that C=3.

According to a third aspect, an embodiment of this application provides a communication method. The method may be performed by a terminal device or a chip in the terminal device. The method includes: receiving a physical downlink control channel PDCCH sent by a network device, where control channel elements CCEs included in the PDCCH include a CCE that exceeds a first bandwidth range and a CCE within the first bandwidth range, downlink control information corresponding to the PDCCH is carried in the CCE within the first bandwidth range, the first bandwidth range is a transmission bandwidth supported by the network device, and the first bandwidth range is less than 24 resource blocks RBs; and obtaining the downlink control information based on the PDCCH. In a narrowband private network spectrum, the downlink control information corresponding to the PDCCH is carried in the CCE within the first bandwidth range, so that all CCEs carrying the downlink control information are within the first bandwidth range, and the terminal device can completely receive the downlink control information. Therefore, receiving performance of the PDCCH is improved.

In a possible design, an encoded bit of the downlink control information is mapped to a time-frequency resource unit corresponding to X-M CCEs, where X is an aggregation level of the PDCCH, M is a quantity of CCEs that exceed the first bandwidth range, and M is an integer greater than or equal to 0. When a quantity of bits of the downlink control information remains unchanged after encoding, the encoded bit of the downlink control information is mapped to a subcarrier corresponding to the X-M CCEs within the first bandwidth range, so that the PDCCH can be completely received by the terminal.

In another possible design, a reference signal received measurement result of the terminal device is greater than or equal to a first threshold, and/or a ratio of a quantity of CCEs corresponding to the PDCCH that fall within the first bandwidth range to a total quantity of CCEs corresponding to the PDCCH is greater than a second threshold. The downlink control information corresponding to the PDCCH is allowed to be carried in the CCE within the first bandwidth range only when channel quality is good, and/or the downlink control information corresponding to the PDCCH is allowed to be carried in the CCE within the first bandwidth range only when the ratio of the quantity of CCEs that exceed the first bandwidth range to the quantity of CCEs corresponding to the PDCCH is small. In this way, it is ensured that the downlink control information obtained after rate matching can be completely parsed by the terminal device, so that the receiving performance of the PDCCH is improved.

In another possible design, the PDCCH corresponds to X CCEs, the X CCEs are X consecutive CCEs starting from a first CCE in a frequency increasing direction, and X is an aggregation level of the PDCCH. A correspondence between the PDCCH and the CCE is redefined, so that the downlink control information corresponding to the PDCCH is carried in the CCE within the first bandwidth range. Therefore, the receiving performance of the PDCCH is improved.

In another possible design, indication information is received from the network device, where the indication information indicates a manner of determining the PDCCH and the CCE. The correspondence between the PDCCH and the CCE is determined by using the indication information, to obtain the downlink control information from the CCE corresponding to the PDCCH. Therefore, receiving efficiency of the PDCCH is improved.

In another possible design, the indication information is determined based on a synchronization signal. For example, the terminal device determines the indication information based on a relative position between a received primary synchronization signal and a received secondary synchronization signal, so that signaling overheads are reduced. For another example, the terminal device determines the indication information based on a reserved cell identifier included in a received primary synchronization signal and a received secondary synchronization signal, so that signaling overheads can also be reduced. The reserved cell identifier is an identifier that is not allocated to an existing cell in a private network. The reserved cell identifier may be a single cell identifier, or may be a group of cell identifiers.

In another possible design, X is 4, 5, 7, or 8. For example, when the first bandwidth range is 16 RBs, a CORESET #0 may support X being equal to 5, and all five CCEs within the 16 RBs are included in one PDCCH. For another example, when the first bandwidth range is 15 RBs, a CORESET #0 may support X being equal to 7, and all seven CCEs in the 15 RBs are included in one PDCCH, so that receiving performance of the PDCCH is improved.

In another possible design, the physical downlink control channel PDCCH is included in a control resource set 0.

In another possible design, the network device directly determines the first bandwidth range based on two parameters: a quantity R of rows and a quantity C of columns that are of an interleaver. The first bandwidth range corresponds to a quantity of effective frequency domain RBs. Optionally, R=2 and C=4, or R=2 and C=3. For example, when a quantity of time domain symbols occupied by the CORESET #0 is 3, it may be further determined based on R=2 and C=4 that a quantity of frequency domain RBs occupied by the CORESET #0 is 15 or 16, that is, the first bandwidth range is 15 RBs or 16 RBs. When a quantity of time domain symbols occupied by the CORESET #0 is 2, it may also be further determined based on R=2 and C=3 that a quantity of frequency domain RBs occupied by the CORESET #0 is 15 or 16, that is, the first bandwidth range is 15 RBs or 16 RBs.

According to a fourth aspect, an embodiment of this application provides a communication method. The method may be performed by a network device or a chip in the network device. The method includes: determining a physical downlink control channel PDCCH, where control channel elements CCEs included in the PDCCH include a CCE that exceeds a first bandwidth range and a CCE within the first bandwidth range, downlink control information corresponding to the PDCCH is carried in the CCE within the first bandwidth range, the first bandwidth range is a transmission bandwidth supported by the network device, and the first bandwidth range is less than 24 resource blocks RBs; and sending the PDCCH to a terminal device, where the PDCCH carries the downlink control information. In a narrowband private network spectrum, the downlink control information corresponding to the PDCCH is carried in the CCE within the first bandwidth range, so that all CCEs carrying the downlink control information are within the first bandwidth range, and the terminal device can completely receive the downlink control information. Therefore, receiving performance of the PDCCH is improved.

In a possible design, an encoded bit of the downlink control information is mapped to a time-frequency resource unit corresponding to X-M CCEs, where X is an aggregation level of the PDCCH, M is a quantity of CCEs that exceed the first bandwidth range, and M is an integer greater than or equal to 0. When a quantity of bits of the downlink control information remains unchanged after encoding, the encoded bit of the downlink control information is mapped to a subcarrier corresponding to the X-M CCEs within the first bandwidth range, so that an actual transmission bit rate is improved.

In another possible design, a reference signal received measurement result of the terminal device is greater than or equal to a first threshold, and/or a ratio of a quantity of CCEs corresponding to the PDCCH that fall within the first bandwidth range to a total quantity of CCEs corresponding to the PDCCH is greater than a second threshold. The downlink control information corresponding to the PDCCH is allowed to be carried in the CCE within the first bandwidth range only when channel quality is good, and/or the downlink control information corresponding to the PDCCH is allowed to be carried in the CCE within the first bandwidth range only when the ratio of the quantity of CCEs that exceed the first bandwidth range to the quantity of CCEs corresponding to the PDCCH is small. In this way, it is ensured that the downlink control information obtained after rate matching can be completely parsed by the terminal device, so that the receiving performance of the PDCCH is improved.

In another possible design, the PDCCH corresponds to X CCEs, the X CCEs are X consecutive CCEs starting from a first CCE in a frequency increasing direction, and X is an aggregation level of the PDCCH. A correspondence between the PDCCH and the CCE is redefined, so that the downlink control information corresponding to the PDCCH is carried in the CCE within the first bandwidth range. Therefore, the receiving performance of the PDCCH is improved.

In another possible design, indication information is sent to the terminal device, where the indication information indicates a manner of determining the PDCCH and the CCE. The correspondence between the PDCCH and the CCE is determined by using the indication information, to obtain the downlink control information from the CCE corresponding to the PDCCH. Therefore, receiving efficiency of the PDCCH is improved.

In another possible design, the indication information is determined based on a synchronization signal. For example, the terminal device determines the indication information based on a relative position between a received primary synchronization signal and a received secondary synchronization signal, so that signaling overheads are reduced. For another example, the terminal device determines the indication information based on a reserved cell identifier included in a received primary synchronization signal and a received secondary synchronization signal, so that signaling overheads can also be reduced. The reserved cell identifier is an identifier that is not allocated to an existing cell in a private network. The reserved cell identifier may be a single cell identifier, or may be a group of cell identifiers.

In another possible design, X is 4, 5, 7, or 8. For example, when the first bandwidth range is 16 RBs, a CORESET #0 may support X being equal to 5, and all five CCEs within the 16 RBs are included in one PDCCH. For another example, when the first bandwidth range is 15 RBs, a CORESET #0 may support X being equal to 7, and all seven CCEs in the 15 RBs are included in one PDCCH, so that receiving performance of the PDCCH is improved.

In another possible design, the physical downlink control channel PDCCH is included in a control resource set 0.

In another possible design, the network device directly determines the first bandwidth range based on two parameters: a quantity R of rows and a quantity C of columns that are of an interleaver. The first bandwidth range corresponds to a quantity of effective frequency domain RBs. Optionally, R=2 and C=4, or R=2 and C=3. For example, when a quantity of time domain symbols occupied by the CORESET #0 is 3, it may be further determined based on R=2 and C=4 that a quantity of effective frequency domain RBs occupied by the CORESET #0 is 15 or 16, that is, the first bandwidth range is 15 RBs or 16 RBs. When a quantity of time domain symbols occupied by the CORESET #0 is 2, it may also be further determined based on R=2 and C=3 that a quantity of effective frequency domain RBs occupied by the CORESET #0 is 15 or 16, that is, the first bandwidth range is 15 RBs or 16 RBs.

In another possible design, the network device determines the quantity R of rows and the quantity C of columns of the interleaver based on the first bandwidth range, to obtain a mapping relationship between REG bundling and the CCE based on the quantity R of rows and the quantity C of columns of the interleaver. The first bandwidth range corresponds to a quantity of effective frequency domain RBs. For example, when the quantity of time domain symbols occupied by the CORESET #0 is 3, and the quantity of effective frequency domain RBs is 15 or 16, it may be further determined based on the quantity R of rows=2 that C=4. For another example, when the quantity of time domain symbols occupied by the CORESET #0 is 2, and the quantity of effective frequency domain RBs is 15 or 16, it may be further determined based on the quantity R of rows=2 that C=3.

According to a fifth aspect, an embodiment of this application provides a communication method. The method may be performed by a terminal device or a chip in the terminal device. The method includes: receiving control resource set configuration information from a network device, determining a time domain resource and/or a frequency domain resource of a first control resource set based on the control resource set configuration information, and detecting a physical downlink control channel PDCCH on the time domain resource and/or the frequency domain resource of the first control resource set.

In a possible design, the first control resource set is a control resource set 0.

In a possible design, the control resource set configuration information includes first indication information and/or second indication information. The first indication information indicates a quantity of time domain symbols included in the first control resource set. The second indication information indicates a quantity of frequency domain RBs occupied by the first control resource set and/or a first offset. The first offset is an offset between a smallest RB index of the first control resource set and a smallest RB index of an SSB.

In a possible design, the control resource set configuration information includes the first indication information and the second indication information, and the first indication information and the second indication information may be carried in different information elements of a master information block MIB and/or physical layer additional bits of a system message.

In a possible design, a bit occupied by the first indication information may be some or all bits occupied by a first information element in a MIB, and the first information element may be at least one of subCarrierSpacingCommon, dmrs-TypeA-Position, and pdcch-ConfigSIB 1.

In a possible design, the control resource set configuration information includes the first indication information and the second indication information, and the first indication information and the second indication information may be carried in a pdcch-configsib1 information element of a master information block MIB.

In a possible design, the first offset offset is an integer greater than or equal to -5 and less than or equal to 9.

In a possible design, the first offset offset is an integer greater than or equal to -5 and less than or equal to 0.

In a possible design, the first offset offset is an integer greater than or equal to 0 and less than or equal to 9.

In a possible design, X of the physical downlink control channel PDCCH supports only 4.

In a possible design, a quantity of frequency domain resource RBs occupied by the first control resource set is less than or equal to a first bandwidth range. The first bandwidth range does not exceed 24 RBs. The first bandwidth range may be 20, 16, 15, or 12 RBs.

In a possible design, the quantity of time domain symbols included in the first control resource set is 2 or 3.

In a possible design, the control resource set configuration information includes the second indication information. The quantity of time domain symbols included in the first control resource set is a preset value. The preset value is 2 or 3.

In another possible design, a ratio of EPRE of data and/or a DMRS of the physical downlink control channel PDCCH to EPRE of an SSS is determined based on a first ratio, and the first ratio is a ratio of a quantity of frequency domain resources corresponding to the first bandwidth range to a quantity of frequency domain resources corresponding to a second bandwidth range. The first bandwidth range is a quantity of frequency domain resources required for transmitting the physical downlink control channel PDCCH, and the first bandwidth range does not exceed 24 RBs. The second bandwidth range is 24 RBs.

According to a sixth aspect, an embodiment of this application provides a communication method. The method may be performed by a network device or a chip in the network device. The method includes: determining and sending control resource set configuration information, where the control resource set configuration information includes a time domain resource and/or a frequency domain resource of a first control resource set, and sending a physical downlink control channel PDCCH on the time domain resource and/or the frequency domain resource of the first control resource set.

In a possible design, the first control resource set is a control resource set 0.

In a possible design, the control resource set configuration information includes first indication information and/or second indication information. The first indication information indicates a quantity of time domain symbols included in the first control resource set. The second indication information indicates a quantity of frequency domain RBs occupied by the first control resource set and/or a first offset. The first offset is an offset between a smallest RB index of the first control resource set and a smallest RB index of an SSB.

In a possible design, the control resource set configuration information includes the first indication information and the second indication information, and the first indication information and the second indication information may be carried in different information elements of a master information block MIB and/or physical layer additional bits of a system message.

In a possible design, a bit occupied by the first indication information may be some or all bits occupied by a first information element in a MIB, and the first information element may be at least one of subCarrierSpacingCommon, dmrs-TypeA-Position, and pdcch-ConfigSIB 1.

In a possible design, the control resource set configuration information includes the first indication information and the second indication information, and the first indication information and the second indication information may be carried in a pdcch-configsib1 information element of a master information block MIB.

In a possible design, the first offset offset is an integer greater than or equal to -5 and less than or equal to 9.

In a possible design, the first offset offset is an integer greater than or equal to -5 and less than or equal to 0.

In a possible design, the first offset offset is an integer greater than or equal to 0 and less than or equal to 9.

In a possible design, X of the physical downlink control channel PDCCH supports only 4.

In a possible design, a quantity of frequency domain resource RBs occupied by the first control resource set is less than or equal to a first bandwidth range. The first bandwidth range does not exceed 24 RBs. The first bandwidth range may be 20, 16, 15, or 12 RBs.

In a possible design, the quantity of time domain symbols included in the first control resource set is 2 or 3.

In a possible design, the control resource set configuration information includes the second indication information. The quantity of time domain symbols included in the first control resource set is a preset value. The preset value is 2 or 3.

In another possible design, a ratio of EPRE of data and/or a DMRS of the physical downlink control channel PDCCH to EPRE of an SSS is determined based on a first ratio, and the first ratio is a ratio of a quantity of frequency domain resources corresponding to the first bandwidth range to a quantity of frequency domain resources corresponding to a second bandwidth range. The first bandwidth range is a quantity of frequency domain resources required for transmitting the physical downlink control channel PDCCH, and the first bandwidth range does not exceed 24 RBs. The second bandwidth range is 24 RBs.

According to a seventh aspect, an embodiment of this application provides a communication method. The method may be performed by a terminal device or a chip in the terminal device. The method includes:

receiving first indication information from a network device, where the first indication information indicates a first parameter configuration, the first parameter configuration is one of K parameter configurations, and K is a positive integer; and determining a time-frequency resource position of a first control resource set CORESET based on the first parameter configuration. The first indication information is received to indicate the first parameter configuration in the K parameter configurations, and the time-frequency resource position of the first CORESET is determined based on the first parameter configuration, so that signaling overheads are reduced.

In a possible design, any one of the K parameter configurations includes one or more of the following parameters: a quantity of resource blocks RBs, a frequency domain resource offset, a quantity of time domain symbols, a mapping manner, a puncturing manner, and a multiplexing mode.

In a possible design, second indication information is received from the network device, where the second indication information indicates the first parameter configuration; and the first parameter configuration is determined based on the first indication information and the second indication information. The first parameter configuration is determined based on the first indication information and the second indication information, and the time-frequency resource position of the first CORESET is determined based on the first parameter configuration, so that the signaling overheads are reduced.

In a possible design, when a value of the second indication information is 0 or is within a range from 0 to 11, a value of a frequency domain resource offset in the first parameter configuration is 0 or 2; or when a value of the second indication information is 1 or is within a range from 12 to 23, a value of a frequency domain resource offset in the first parameter configuration is 1 or 3.

In a possible design, when a value of the second indication information is 0 or is within a range from 0 to 11, a definition of a frequency domain resource offset in the first parameter configuration is a first definition; or when a value of the second indication information is 1 or is within a range from 12 to 23, a definition of a frequency domain resource offset in the first parameter configuration is a second definition.

The first definition is an offset between a smallest RB index of the first CORESET and a smallest RB index of a pre- or post-puncturing synchronization signal and physical broadcast channel block SSB, and the second definition is an offset between a $2^{nd}$ RB index of the first CORESET and the smallest RB index of the pre- or post-puncturing SSB or the offset between the smallest RB index of the first CORESET and the smallest RB index of the pre- or post-puncturing SSB minus 1.

In a possible design, when a value of the second indication information is 0 or is within a range from 0 to 11, a quantity of RBs in the first parameter configuration is 12; or when a value of the second indication information is 1 or is within a range from 12 to 23, a quantity of RBs in the first parameter configuration is 15.

In a possible design, the second indication information is carried in a physical broadcast channel PBCH physical layer additional bit, or the second indication information is carried in a master information block MIB and a PBCH physical layer additional bit.

In a possible design, the first CORESET is 15 RBs with lowest frequencies in a CORESET of 24 RBs, the first CORESET is a CORESET obtained after 9 RBs with highest frequencies in a CORESET of 24 RBs are punctured, the first CORESET is 15 RBs with highest frequencies in a CORESET of 24 RBs, or the first CORESET is a CORESET obtained after 9 RBs with lowest frequencies in a CORESET of 24 RBs are punctured.

In a possible design, K is 10, 11, 12, 13, 14, 15, or 16.

In a possible design, the K parameter configurations are used for CORESETs.

In a possible design, the frequency domain resource offset is a frequency domain resource offset of a CORESET relative to an SSB.

In a possible design, the quantity of time domain symbols is a quantity of symbols occupied by a CORESET in time domain.

In a possible design, the mapping manner is an interleaved manner or a non-interleaved manner. The mapping manner is a manner of CCE-to-REG mapping in the CORESET.

In a possible design, the multiplexing mode is a multiplexing mode between an SSB and a CORESET.

In a possible design, the puncturing manner is a puncturing manner for a CORESET or a CORESET #0.

In a possible design, bandwidths of CORESETs corresponding to the K parameter configurations each are less than 24 RBs. Specifically, the bandwidths of the CORESETs corresponding to the K parameter configurations include one or more of 12 RBs and 15 RBs. For example, the bandwidths of the CORESETs corresponding to the K parameter configurations include 12 RBs and 15 RBs, or 15 RBs.

In a possible design, a bandwidth of a CORESET corresponding to a parameter configuration in which a quantity of RBs is 24 in the K parameter configurations is 15 RBs.

In a possible design, frequency domain resource offsets corresponding to the K parameter configurations each are a value in a first value set, and a quantity of values in the first value set is greater than 3.

In this manner, the K parameter configurations can support more frequency domain resource offsets, that is, support more frequency domain deployment positions of CORESETs, and therefore support flexible channel or network deployment.

According to an eighth aspect, an embodiment of this application provides a communication method. The method may be performed by a network device or a chip in the network device. The method includes: determining a first parameter configuration, where the first parameter configuration is one of K parameter configurations, the first parameter configuration is used to determine a time-frequency resource position of a first control resource set CORESET, and K is a positive integer; and sending first indication information to a terminal device, where the first indication information indicates the first parameter configuration. The first indication information is sent to indicate the first parameter configuration in the K parameter configurations, and the time-frequency resource position of the first CORESET is determined based on the first parameter configuration, so that signaling overheads are reduced.

In a possible design, any one of the K parameter configurations includes one or more of the following parameters: a quantity of resource blocks RBs, a frequency domain resource offset, a quantity of time domain symbols, a mapping manner, a puncturing manner, and a multiplexing mode.

In a possible design, second indication information is sent to the terminal device, where the second indication information indicates the first parameter configuration. The second indication information is sent, the first parameter configuration is determined with reference to the first indication information and the second indication information, and the time-frequency resource position of the first CORESET is determined based on the first parameter configuration, so that the signaling overheads are reduced.

In a possible design, when a value of the second indication information is 0 or is within a range from 0 to 11, a value of a frequency domain resource offset in the first parameter configuration is 0 or 2; or when a value of the second indication information is 1 or is within a range from 12 to 23, a value of a frequency domain resource offset in the first parameter configuration is 1 or 3.

In a possible design, when a value of the second indication information is 0 or is within a range from 0 to 11, a definition of a frequency domain resource offset in the first parameter configuration is a first definition; or when a value of the second indication information is 1 or is within a range from 12 to 23, a definition of a frequency domain resource offset in the first parameter configuration is a second definition.

The first definition is an offset between a smallest RB index of the first CORESET and a smallest RB index of a pre- or post-puncturing synchronization signal and physical broadcast channel block SSB, and the second definition is an offset between a $2^{nd}$ RB index of the first CORESET and the smallest RB index of the pre- or post-puncturing SSB or the offset between the smallest RB index of the first CORESET and the smallest RB index of the pre- or post-puncturing SSB minus 1.

In a possible design, when a value of the second indication information is 0 or is within a range from 0 to 11, a quantity of RBs in the first parameter configuration is 12; or when a value of the second indication information is 1 or is within a range from 12 to 23, a quantity of RBs in the first parameter configuration is 15.

In a possible design, the second indication information is carried in a PBCH physical layer additional bit, or the second indication information is carried in a MIB and a PBCH physical layer additional bit.

In a possible design, the first CORESET is 15 RBs with lowest frequencies in a CORESET of 24 RBs, the first CORESET is a CORESET obtained after 9 RBs with highest frequencies in a CORESET of 24 RBs are punctured, the first CORESET is 15 RBs with highest frequencies in a CORESET of 24 RBs, or the first CORESET is a CORESET obtained after 9 RBs with lowest frequencies in a CORESET of 24 RBs are punctured.

In a possible design, K is 10, 11, 12, 13, 14, 15, or 16.

In a possible design, the K parameter configurations are used for CORESETs.

In a possible design, the frequency domain resource offset is a frequency domain resource offset of a CORESET relative to an SSB.

In a possible design, the quantity of time domain symbols is a quantity of symbols occupied by a CORESET in time domain.

In a possible design, the mapping manner is an interleaved manner or a non-interleaved manner. The mapping manner is a manner of CCE-to-REG mapping in the CORESET.

In a possible design, the multiplexing mode is a multiplexing mode between an SSB and a CORESET.

In a possible design, the puncturing manner is a puncturing manner for a CORESET or a CORESET #0.

In a possible design, bandwidths of CORESETs corresponding to the K parameter configurations each are less than 24 RBs. Specifically, the bandwidths of the CORESETs corresponding to the K parameter configurations include one or more of 12 RBs and 15 RBs. For example, the bandwidths of the CORESETs corresponding to the K parameter configurations include 12 RBs and 15 RBs, or 15 RBs.

In a possible design, a bandwidth of a CORESET corresponding to a parameter configuration in which a quantity of RBs is 24 in the K parameter configurations is 15 RBs.

In a possible design, frequency domain resource offsets corresponding to the K parameter configurations each are a value in a first value set, and a quantity of values in the first value set is greater than 3.

In this manner, the K parameter configurations can support more frequency domain resource offsets, that is, support more frequency domain deployment positions of CORESETs, and therefore support flexible channel or network deployment.

According to a ninth aspect, an embodiment of this application provides a communication apparatus. The apparatus includes:

a receiving module, configured to receive a physical downlink control channel PDCCH from a network device, where all control channel elements CCEs included in the PDCCH are within a first bandwidth range, the first bandwidth range is a transmission bandwidth supported by the network device, and the first bandwidth range is less than 24 resource blocks RBs; and

a processing module, configured to obtain the downlink control information based on the PDCCH.

In a possible design, the PDCCH corresponds to X CCEs, the X CCEs are X consecutive CCEs starting from a first CCE in a frequency increasing direction, and X is an aggregation level of the PDCCH.

In another possible design, the PDCCH corresponds to X CCEs, the X CCEs are determined starting from a first CCE in ascending order of CCE numbers, the X CCEs do not include a CCE outside the first bandwidth range, and X is an aggregation level of the PDCCH.

In another possible design, the PDCCH corresponds to at least one CCE combination, each of the at least one CCE combination includes X CCEs, the X CCEs are all within the first bandwidth range, and X is an aggregation level of the PDCCH.

In another possible design, the receiving module is further configured to receive indication information from the network device, where the indication information indicates a manner of determining the PDCCH and the CCE.

In another possible design, the indication information is determined based on a synchronization signal.

In another possible design, X is 4, 5, 7, or 8.

In another possible design, the physical downlink control channel PDCCH is included in a control resource set 0.

For operations performed by the communication apparatus and beneficial effect, refer to the method according to the first aspect and the beneficial effect. Repeated parts are not described again.

According to a tenth aspect, an embodiment of this application provides a communication apparatus. The apparatus includes:

a processing module, configured to determine a physical downlink control channel PDCCH, where all control channel elements CCEs included in the PDCCH are within a first bandwidth range, the first bandwidth range is a transmission bandwidth supported by the network device, and the first bandwidth range is less than 24 resource blocks RBs; and a sending module, configured to send the PDCCH to a terminal device, where the PDCCH carries downlink control information.

In a possible design, the PDCCH corresponds to X CCEs, the X CCEs are X consecutive CCEs starting from a first CCE in a frequency increasing direction, and X is an aggregation level of the PDCCH.

In another possible design, the PDCCH corresponds to X CCEs, the X CCEs are determined starting from a first CCE in ascending order of CCE numbers, the X CCEs do not include a CCE outside the first bandwidth range, and X is an aggregation level of the PDCCH.

In another possible design, the PDCCH corresponds to at least one CCE combination, each of the at least one CCE combination includes X CCEs, the X CCEs are all within the first bandwidth range, and X is an aggregation level of the PDCCH.

In another possible design, the sending module is further configured to send indication information to the terminal device, where the indication information indicates a manner of determining the PDCCH and the CCE.

In another possible design, the indication information is determined based on a synchronization signal.

In another possible design, X is 4, 5, 7, or 8.

In another possible design, the physical downlink control channel PDCCH is included in a control resource set 0.

For operations performed by the communication apparatus and beneficial effect, refer to the method according to the second aspect and the beneficial effect. Repeated parts are not described again.

According to an eleventh aspect, an embodiment of this application provides a communication apparatus. The apparatus includes:

a receiving module, configured to receive a physical downlink control channel PDCCH sent by a network device, where control channel elements CCEs included in the PDCCH include a CCE that exceeds a first bandwidth range and a CCE within the first bandwidth range, downlink control information corresponding to the PDCCH is carried in the CCE within the first bandwidth range, the first bandwidth range is a transmission bandwidth supported by the network device, and the first bandwidth range is less than 24 resource blocks RBs; and a processing module, configured to obtain the downlink control information based on the PDCCH.

In a possible design, an encoded bit of the downlink control information is mapped to a time-frequency resource unit corresponding to X-M CCEs, where X is an aggregation level of the PDCCH, M is a quantity of CCEs that exceed the first bandwidth range, and M is an integer greater than or equal to 0.

In another possible design, a reference signal received measurement result of a terminal device is greater than a first threshold, and/or a ratio of a quantity of CCEs within the first bandwidth range to a quantity of CCEs corresponding to the PDCCH is greater than a second threshold.

In another possible design, the PDCCH corresponds to X CCEs, the X CCEs are X consecutive CCEs starting from a first CCE in a frequency increasing direction, and X is an aggregation level of the PDCCH.

In another possible design, the receiving module is further configured to receive indication information from the network device, where the indication information indicates a manner of determining the PDCCH and the CCE.

In another possible design, the indication information is determined based on a synchronization signal.

In another possible design, X is 4, 5, 7, or 8.

In another possible design, the physical downlink control channel PDCCH is included in a control resource set 0.

For operations performed by the communication apparatus and beneficial effect, refer to the method according to the third aspect and the beneficial effect. Repeated parts are not described again.

According to a twelfth aspect, an embodiment of this application provides a communication apparatus. The apparatus includes:

a processing module, configured to determine a physical downlink control channel PDCCH, where control channel elements CCEs included in the PDCCH include a CCE that exceeds a first bandwidth range and a CCE within the first bandwidth range, downlink control information corresponding to the PDCCH is carried in the CCE within the first bandwidth range, the first bandwidth range is a transmission bandwidth supported by a network device, and the first bandwidth range is less than 24 resource blocks RBs; and

a sending module, configured to send the PDCCH to a terminal device, where the PDCCH carries the downlink control information.

In another possible design, an encoded bit of the downlink control information is mapped to a time-frequency resource unit corresponding to X-M CCEs, where X is an aggregation level of the PDCCH, M is a quantity of CCEs that exceed the first bandwidth range, and M is an integer greater than or equal to 0.

In another possible design, the processing module is configured to determine that a reference signal received measurement result of the terminal device is greater than a first threshold, and/or a ratio of a quantity of CCEs within the first bandwidth range to a quantity of CCEs corresponding to the PDCCH is greater than a second threshold.

In another possible design, the PDCCH corresponds to X CCEs, the X CCEs are X consecutive CCEs starting from a first CCE in a frequency increasing direction, and X is an aggregation level of the PDCCH.

In another possible design, the sending module is configured to send indication information to the terminal device, where the indication information indicates a manner of determining the PDCCH and the CCE.

In another possible design, the indication information is determined based on a synchronization signal.

In another possible design, X is 4, 5, 7, or 8.

In another possible design, the physical downlink control channel PDCCH is included in a control resource set 0.

For operations performed by the communication apparatus and beneficial effect, refer to the method according to the fourth aspect and the beneficial effect. Repeated parts are not described again.

According to a thirteenth aspect, an embodiment of this application provides a communication apparatus. The apparatus includes:

a receiving module, configured to receive first indication information from a network device, where the first indication information indicates a first parameter configuration, the first parameter configuration is one of K parameter configurations, and K is a positive integer; and

a processing module, configured to determine a time-frequency resource position of a first control resource set CORESET based on the first parameter configuration.

In a possible design, any one of the K parameter configurations includes one or more of the following parameters: a quantity of resource blocks RBs, a frequency domain resource offset, a quantity of time domain symbols, a mapping manner, a puncturing manner, and a multiplexing mode.

In a possible design, the receiving module is further configured to receive second indication information from the network device, where the second indication information indicates the first parameter configuration; and

the processing module is further configured to determine the first parameter configuration based on the first indication information and the second indication information.

In a possible design, when a value of the second indication information is 0 or is within a range from 0 to 11, a value of a frequency domain resource offset in the first parameter configuration is 0 or 2; or when a value of the second indication information is 1 or is within a range from 12 to 23, a value of a frequency domain resource offset in the first parameter configuration is 1 or 3.

In a possible design, when a value of the second indication information is 0 or is within a range from 0 to 11, a definition of a frequency domain resource offset in the first parameter configuration is a first definition; or when a value of the second indication information is 1 or is within a range from 12 to 23, a definition of a frequency domain resource offset in the first parameter configuration is a second definition.

The first definition is an offset between a smallest RB index of the first CORESET and a smallest RB index of a pre- or post-puncturing synchronization signal and physical broadcast channel block SSB, and the second definition is an offset between a 2nd RB index of the first CORESET and the smallest RB index of the pre- or post-puncturing SSB or the offset between the smallest RB index of the first CORESET and the smallest RB index of the pre- or post-puncturing SSB minus 1.

In a possible design, when a value of the second indication information is 0 or is within a range from 0 to 11, a quantity of RBs in the first parameter configuration is 12; or when a value of the second indication information is 1 or is within a range from 12 to 23, a quantity of RBs in the first parameter configuration is 15.

In a possible design, the second indication information is carried in a physical broadcast channel PBCH physical layer additional bit, or the second indication information is carried in a master information block MIB and a PBCH physical layer additional bit.

In a possible design, the first CORESET is 15 RBs with lowest frequencies in a CORESET of 24 RBs, the first CORESET is a CORESET obtained after 9 RBs with highest frequencies in a CORESET of 24 RBs are punctured, the first CORESET is 15 RBs with highest frequencies in a CORESET of 24 RBs, or the first CORESET is a CORESET obtained after 9 RBs with lowest frequencies in a CORESET of 24 RBs are punctured.

In a possible design, K is 10, 11, 12, 13, 14, 15, or 16.

In a possible design, the K parameter configurations are used for CORESETs.

In a possible design, the frequency domain resource offset is a frequency domain resource offset of a CORESET relative to an SSB.

In a possible design, the quantity of time domain symbols is a quantity of symbols occupied by a CORESET in time domain.

In a possible design, the mapping manner is an interleaved manner or a non-interleaved manner. The mapping manner is a manner of CCE-to-REG mapping in the CORESET.

In a possible design, the multiplexing mode is a multiplexing mode between an SSB and a CORESET.

In a possible design, the puncturing manner is a puncturing manner for a CORESET or a CORESET #0.

In a possible design, bandwidths of CORESETs corresponding to the K parameter configurations each are less than 24 RBs. Specifically, the bandwidths of the CORESETs corresponding to the K parameter configurations include one or more of 12 RBs and 15 RBs. For example, the bandwidths of the CORESETs corresponding to the K parameter configurations include 12 RBs and 15 RBs, or 15 RBs.

In a possible design, a bandwidth of a CORESET corresponding to a parameter configuration in which a quantity of RBs is 24 in the K parameter configurations is 15 RBs.

In a possible design, frequency domain resource offsets corresponding to the K parameter configurations each are a value in a first value set, and a quantity of values in the first value set is greater than 3.

For operations performed by the communication apparatus and beneficial effect, refer to the method according to the seventh aspect and the beneficial effect. Repeated parts are not described again.

According to a fourteenth aspect, an embodiment of this application provides a communication apparatus. The apparatus includes:

a processing module, configured to determine a first parameter configuration, where the first parameter configuration is one of K parameter configurations, the first parameter configuration is used to determine a time-frequency resource position of a first control resource set CORESET, and K is a positive integer; and

a sending module, configured to send first indication information to a terminal device, where the first indication information indicates the first parameter configuration.

In a possible design, any one of the K parameter configurations includes one or more of the following parameters: a quantity of resource blocks RBs, a frequency domain resource offset, a quantity of time domain symbols, a mapping manner, a puncturing manner, and a multiplexing mode.

In a possible design, the sending module is further configured to send second indication information to the terminal device, where the second indication information indicates the first parameter configuration.

In a possible design, when a value of the second indication information is 0 or is within a range from 0 to 11, a value of a frequency domain resource offset in the first parameter configuration is 0 or 2; or when a value of the second indication information is 1 or is within a range from 12 to 23, a value of a frequency domain resource offset in the first parameter configuration is 1 or 3.

In a possible design, when a value of the second indication information is 0 or is within a range from 0 to 11, a definition of a frequency domain resource offset in the first parameter configuration is a first definition; or when a value of the second indication information is 1 or is within a range from 12 to 23, a definition of a frequency domain resource offset in the first parameter configuration is a second definition.

The first definition is an offset between a smallest RB index of the first CORESET and a smallest RB index of a pre- or post-puncturing synchronization signal and physical broadcast channel block SSB, and the second definition is an offset between a $2^{nd}$ RB index of the first CORESET and the smallest RB index of the pre- or post-puncturing SSB or the offset between the smallest RB index of the first CORESET and the smallest RB index of the pre- or post-puncturing SSB minus 1.

In a possible design, when a value of the second indication information is 0 or is within a range from 0 to 11, a quantity of RBs in the first parameter configuration is 12; or when a value of the second indication information is 1 or is within a range from 12 to 23, a quantity of RBs in the first parameter configuration is 15.

In a possible design, the second indication information is carried in a PBCH physical layer additional bit, or the second indication information is carried in a MIB and a PBCH physical layer additional bit.

In a possible design, the first CORESET is 15 RBs with lowest frequencies in a CORESET of 24 RBs, the first CORESET is a CORESET obtained after 9 RBs with highest frequencies in a CORESET of 24 RBs are punctured, the first CORESET is 15 RBs with highest frequencies in a CORESET of 24 RBs, or the first CORESET is a CORESET obtained after 9 RBs with lowest frequencies in a CORESET of 24 RBs are punctured.

In a possible design, K is 10, 11, 12, 13, 14, 15, or 16.

In a possible design, the K parameter configurations are used for CORESETs.

In a possible design, the frequency domain resource offset is a frequency domain resource offset of a CORESET relative to an SSB.

In a possible design, the quantity of time domain symbols is a quantity of symbols occupied by a CORESET in time domain.

In a possible design, the mapping manner is an interleaved manner or a non-interleaved manner. The mapping manner is a manner of CCE-to-REG mapping in the CORESET.

In a possible design, the multiplexing mode is a multiplexing mode between an SSB and a CORESET.

In a possible design, the puncturing manner is a puncturing manner for a CORESET or a CORESET #0.

In a possible design, bandwidths of CORESETs corresponding to the K parameter configurations each are less than 24 RBs. Specifically, the bandwidths of the CORESETs corresponding to the K parameter configurations include one or more of 12 RBs and 15 RBs. For example, the bandwidths of the CORESETs corresponding to the K parameter configurations include 12 RBs and 15 RBs, or 15 RBs.

In a possible design, a bandwidth of a CORESET corresponding to a parameter configuration in which a quantity of RBs is 24 in the K parameter configurations is 15 RBs.

In a possible design, frequency domain resource offsets corresponding to the K parameter configurations each are a value in a first value set, and a quantity of values in the first value set is greater than 3.

For operations performed by the communication apparatus and beneficial effect, refer to the method according to the eighth aspect and the beneficial effect. Repeated parts are not described again.

According to a fifteenth aspect, an embodiment of this application provides a communication apparatus. The communication apparatus is configured to implement the methods and the functions that are performed by the terminal device in the first aspect, the third aspect, the fifth aspect, and the fifth aspect. The communication apparatus is implemented by hardware/software, and the hardware/software of the communication apparatus includes modules corresponding to the foregoing functions.

According to a sixteenth aspect, an embodiment of this application provides a communication apparatus. The communication apparatus is configured to implement the methods and the functions that are performed by the network device in the second aspect, the fourth aspect, the sixth aspect, and the eighth aspect. The communication apparatus is implemented by hardware/software, and the hardware/software of the communication apparatus includes modules corresponding to the foregoing functions.

According to a seventeenth aspect, this application provides a communication apparatus. The apparatus may be a terminal device, an apparatus in the terminal device, or an apparatus that can be used in combination with the terminal device. The communication apparatus may alternatively be a chip system. The communication apparatus may perform the methods according to the first aspect, the third aspect, and the fifth aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effect, refer to the methods according to the first aspect, the third aspect, the fifth aspect, and the seventh aspect and the beneficial effect. Repeated parts are not described again.

According to an eighteenth aspect, this application provides a communication apparatus. The apparatus may be a network device, an apparatus in the network device, or an apparatus that can be used in combination with the network device. The communication apparatus may alternatively be a chip system. The communication apparatus may perform the methods according to the second aspect, the fourth aspect, and the sixth aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effect, refer to the methods according to the second aspect, the fourth aspect, the sixth aspect, and the eighth aspect and the beneficial effect. Repeated parts are not described again.

According to a nineteenth aspect, this application provides a communication apparatus. The communication apparatus includes a processor. When the processor invokes a computer program in a memory, the method according to any one of the first aspect to the eighth aspect is performed.

According to a twentieth aspect, this application provides a communication apparatus. The communication apparatus includes a processor and a memory. The memory is configured to store a computer program. The processor is configured to execute the computer program stored in the memory, to enable the communication apparatus to perform the method according to any one of the first aspect to the eighth aspect.

According to a twenty-first aspect, this application provides a computer-readable storage medium. The computer-readable storage medium is configured to store a computer program. When the computer program is executed, the method according to any one of the first aspect to the eighth aspect is implemented.

According to a twenty-second aspect, this application provides a computer program product including a computer program. When the computer program is executed, the method according to any one of the first aspect to the eighth aspect is implemented.

According to a twenty-third aspect, an embodiment of this application provides a communication system. The communication system includes at least one terminal device and at least one network device. The terminal device is configured to perform the steps in the first aspect, the third aspect, the fifth aspect, and the seventh aspect. The network device is configured to perform the steps in the second aspect, the fourth aspect, the sixth aspect, and the eighth aspect.

BRIEF DESCRIPTION OF DRAWINGS

To describe technical solutions in embodiments of this application or the background more clearly, the following describes accompanying drawings for describing embodiments of this application or the background.

FIG. 1a is a diagram of an architecture of an NR system;
FIG. 1b is a diagram of a communication system;
FIG. 2 is a diagram of a spectrum;
FIG. 3 is a diagram of a CCE-REG mapping relationship in a CORESET #0;
FIG. 4 is a diagram of puncturing a CCE in a private network spectrum;
FIG. 5 is a schematic flowchart of a communication method according to an embodiment of this application;
FIG. 6 is a diagram of distribution of CCEs within 16 RBs;
FIG. 7 is a schematic flowchart of another communication method according to an embodiment of this application;
FIG. 8 is a diagram of rate matching;
FIG. 9 is another diagram of rate matching;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of a terminal device according to an embodiment of this application;
FIG. 13 is a diagram of a structure of a network device according to an embodiment of this application;
FIG. 14 is a schematic flowchart of another communication method according to an embodiment of this application;
FIG. 15 is a schematic flowchart of another communication method according to an embodiment of this application; and
FIG. 16 is a diagram of a puncturing manner according to an embodiment of this application.

DESCRIPTION OF EMBODIMENTS

The following describes embodiments of this application with reference to accompanying drawings in embodiments of this application.

Embodiments of this application may be applied to an NR system, or may be applied to another wireless communication system, for example, a long term evolution (long term evolution, LTE) system, a global system for mobile communications (global system for mobile communications, GSM), a mobile communication system (universal mobile telecommunications system, UMTS), a code division multiple access (code division multiple access, CDMA) system, or a new network device system.

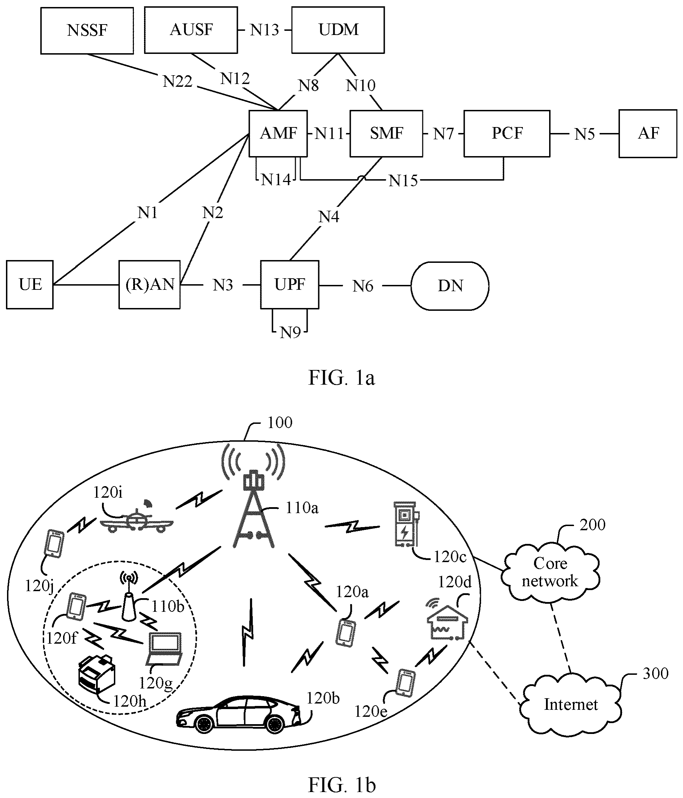

FIG. 1a is a diagram of an architecture of an NR system. The NR system includes two parts: an access network and a core network. The access network is configured to implement functions related to radio access. The core network mainly includes the following several key logical network elements: an access and mobility management function (access and mobility management function, AMF) entity, a session management function (session management function, SMF) entity, a user plane function (user plane function, UPF) entity, a policy control function (policy control function, PCF) entity, and a unified data management (unified data management, UDM) entity. The following describes network elements in FIG. 1a.

UE may be a terminal device, for example, a mobile phone or an internet of things terminal device.

A radio access network (radio access network, (R)AN) device is a device that provides radio access for the UE, and is also referred to as an access network device. The radio access network device includes but is not limited to a 5G base station (next generation NodeB, gNB), a wireless fidelity (wireless fidelity, Wi-Fi) access point (access point, AP), a worldwide interoperability for microwave access (worldwide interoperability for microwave access, WiMAX) base station (base station, BS), and the like.

The AMF entity is mainly responsible for mobility management in a mobile network, for example, user location update, registration of a user with a network, and user handover.

The SMF entity is mainly responsible for session management in the mobile network, for example, session establishment, modification, and release. Specific functions are, for example, allocating an IP address to the user and selecting a UPF that provides a packet forwarding function.

The PCF entity is mainly responsible for providing policies such as a quality of service (quality of service, QoS) policy and a slice selection policy for the AMF and the SMF.

The UDM entity is configured to store user data such as subscription information and authentication/authorization information.

An application function (application function, AF) entity is mainly responsible for providing services for a 3rd generation partnership project (3rd generation partnership project, 3GPP) network, such as affecting service routing and interacting with the PCF to perform policy control.

The UPF entity is mainly responsible for user packet processing, for example, forwarding and charging.

A data network (data network, DN) is mainly responsible for providing the user with a data transmission service, for example, an IP multimedia service (IP multimedia service, IMS) or the internet (internet). The UE accesses the DN by establishing sessions (session) among the UE, the RAN, the UPF, and the DN.

It should be noted that, in FIG. 1a, the network functions and entities may exchange messages through different interfaces. For example, the UE and the AMF entity may interact with each other through an N1 interface, where an exchanged message is referred to as an N1 message. Some interfaces are implemented as service-based interfaces. The UE, the RAN device, the UPF entity, and the DN in FIG. 1a may be referred to as network functions and entities on a data plane, and are configured to carry service data. User-layer data traffic may be transmitted by using a PDU session established between the UE and the DN, and passes through two network function entities: the RAN device and the UPF entity. Other network functions and entities may be collectively referred to as network functions and entities on a control plane, are configured to carry signaling messages, and are mainly responsible for functions such as authentication and authorization, registration management, session management, mobility management, and policy control, to ensure reliability and stability of user-layer data traffic transmission.

FIG. 1b is a diagram of a communication system. The communication system may include an access network 100, a core network 200, and an internet 300. The access network 100 may include network devices 110a and 110b and terminal devices 120a to 120j. It should be understood that the communication system to which a method in embodiments of this application may be applied may include more or fewer network devices or terminal devices. The network device or the terminal device may be hardware, may be software obtained through functional division, or may be a combination thereof. The network device and the terminal device may alternatively communicate with each other through another device or network element. A network device in embodiments of this application may be a device in a wireless network. For example, the network device may be a device that is deployed in a radio access network and that provides a wireless communication function for a terminal device. For example, the network device may be a radio access network (radio access network, RAN) node that connects the terminal device to the wireless network, and may also be referred to as an access network device. In embodiments of this application, an apparatus configured to implement a function of the network device may be a network device, may be a module or a unit that can be used in the network device, or may be an apparatus, for example, a chip system, that can support the network device in implementing the function. The apparatus may be installed in the network device or used in collaboration with the network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a network device in a 5G mobile communication system, for example, a next generation NodeB (next generation NodeB, gNB), a transmission reception point (transmission reception point, TRP), or a TP in an NR system; or one antenna panel or one group of antenna panels (including a plurality of antenna panels) of a base station in the 5G mobile communication system. Alternatively, the network device may be a network node that forms a gNB or a transmission point, for example, a BBU, a distributed unit (distributed unit, DU), or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control RRC layer and a packet data convergence protocol (packet data convergence protocol, PDCP) layer. The DU is responsible for processing a physical layer protocol and a real-time service, and implements functions of a radio link control (radio link control, RLC) layer, a MAC layer, and a physical (physical, PHY) lay er. The AAU implements some physical layer processing functions, radio frequency processing, and a function related to an active antenna. Information at the RRC layer is finally changed into information at the PHY layer, or is changed from information at the PHY layer. Therefore, in this architecture, higher layer signaling (for example, RRC layer signaling) may also be considered as being sent by the DU, or sent by the DU and the AAU. It may be understood that the network device may be a device including one or more of a CU node, a DU node, and an AAU node. In addition, the CU may be classified as a network device in a RAN, or the CU may be classified as a network device in a core network (core network, CN). This is not limited in this application.

A terminal device in embodiments of this application may be a wireless terminal device that can receive scheduling and indication information from a network device. The terminal device may be a device that provides a user with voice and/or data connectivity, a handheld device having a wireless connection function, or another processing device connected to a wireless modem. In embodiments of this application, an apparatus configured to implement a function of the terminal device may be a terminal device, may be a module or a unit that can be used in the terminal device, or may be an apparatus, for example, a chip system, that can support the terminal device in implementing the function. The apparatus may be installed in the terminal device or used in collaboration with the terminal device.

The terminal device is also referred to as user equipment (user equipment, UE), a mobile station (mobile station, MS), a mobile terminal (mobile terminal, MT), or the like. The terminal device is a device that includes a wireless communication function (providing a user with voice/data connectivity), for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a sweeper, a speaker, a set-top box, or the like.

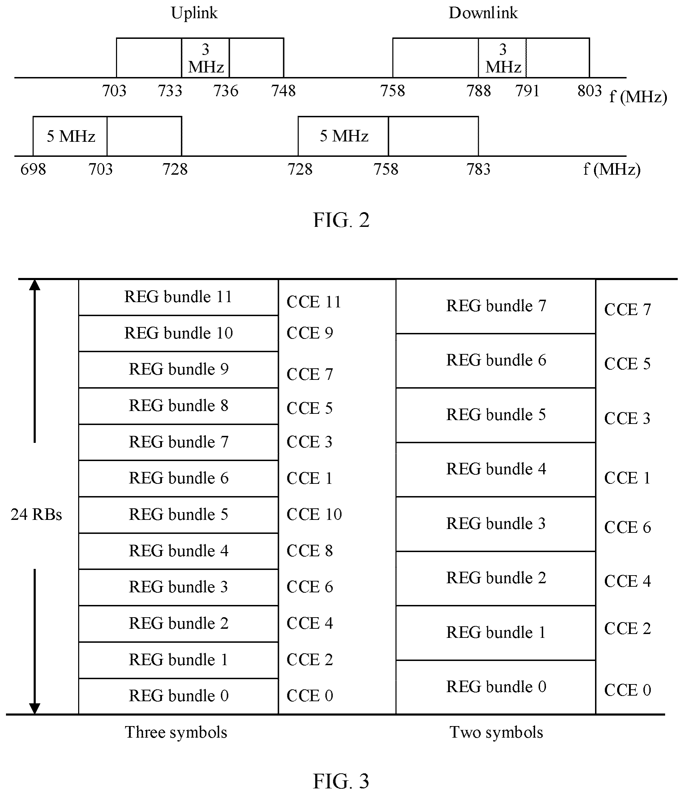

FIG. 2 is a diagram of a spectrum. To implement NR communication on a private network spectrum, a network bandwidth may be 3 MHz or 5 MHz. When an SCS is equal to 15 kHz, a 3 MHz private network spectrum can support only transmission of data of a maximum of 16 RBs in frequency domain. In this narrowband private network spectrum, a network device may not be able to send a complete common control resource block CORESET #0.

In existing NR, a PDCCH actually transmitted in the CORESET #0 is a PDCCH formed by combining CCEs at a specific aggregation level. One CCE includes six resource element groups (resource element group, REG). One REG occupies one RB in frequency domain, and occupies one orthogonal frequency division multiplexing (orthogonal frequency division multiplexing, OFDM) symbol in time domain, that is, one REG includes 12 REs. One REG bundle (REG bundle) includes L REGs. L is an integer greater than or equal to 1.

NR supports two CCE-to-REG mapping manners: non-interleaved mapping and interleaved mapping. A relationship between a CCE and an REG bundle may be described as follows:

An REG bundle i includes REGs {iL, iL + 1, ... , iL + L - 1}, where L is a quantity of REGs included in the REG bundle, $i = 0,1, ..., N_{REG}^{CORESET}/L - 1$, and $N_{REG}^{CORESET} = N_{RB}^{CORESET} N_{symb}^{CORESET}$ is a quantity of REGs in a CORESET.

A CCE j includes REG bundles {f(6j/L), f(6j/L + 1), ..., f(6j/L + 6/L + 1)} , where f(.) is a mapping function.

In an existing protocol, a quantity of time domain symbols supported by the CORESET #0 is 2 or 3, and a supported aggregation level (aggregation level, AL) is 4, 8, or 16. At a 15 kHz subcarrier spacing, a 5 MHz bandwidth includes 24 physical resource blocks (physical resource block, PRB). In addition, the CORESET #0 supports only CCE-REG interleaved mapping, and interleaver parameters are R=2 and L=6.

In the interleaved mapping manner, a mapping function formula is:

$$f(x) = (rC + c + n_{shift}) \bmod \left( N_{REG}^{CORESET}/L \right)$$

$$x = cR + r$$

$$r = 0,1, ..., R - 1$$

$$c = 0,1, ..., C - 1$$

$$C = N_{REG}^{CORESET}/(LR)$$

A process in which UE detects a PDCCH is as follows: For a search space associated with the CORESET #0, for an aggregation level AL, a number of a CCE included in a candidate PDCCH may be given according to the following

formula:

$$L \cdot \left\{ \left( Y_{p,n_{s,f}^{\mu}} + \left\lceil \frac{m_{s,n_{CI}}^{(L)} \cdot N_{\text{CCE},p}}{L \cdot M_{s,\max}^{(L)}} \right\rceil + n_{CI} \right) \bmod \left\lfloor N_{\text{CCE},p}/L \right\rfloor \right\} + i$$

$L \cdot \{.\}$ is used to determine a number of a start CCE, and a value of i ranges from 0 to AL-1.

FIG. 3 is a diagram of a CCE-REG mapping relationship in a CORESET #0. When a quantity of time domain symbols occupied by the CORESET is 2 and a frequency domain is 24 RBs, every six REGs form one REG bundle; and a CCE 0 is mapped to a REG bundle 0, a CCE 1 is mapped to a REG bundle 4, a CCE 2 is mapped to a REG bundle 1, a CCE 3 is mapped to a REG bundle 5, ..., and a CCE 7 is mapped to a REG bundle 7. When a quantity of time domain symbols occupied by the CORESET is 3 and a frequency domain is 24 RBs, every six REGs form one REG bundle; and a CCE 0 is mapped to a REG bundle 0, a CCE 1 is mapped to a REG bundle 6, a CCE 2 is mapped to a REG bundle 1, a CCE 3 is mapped to a REG bundle 7, ..., and a CCE 11 is mapped to a REG bundle 11.

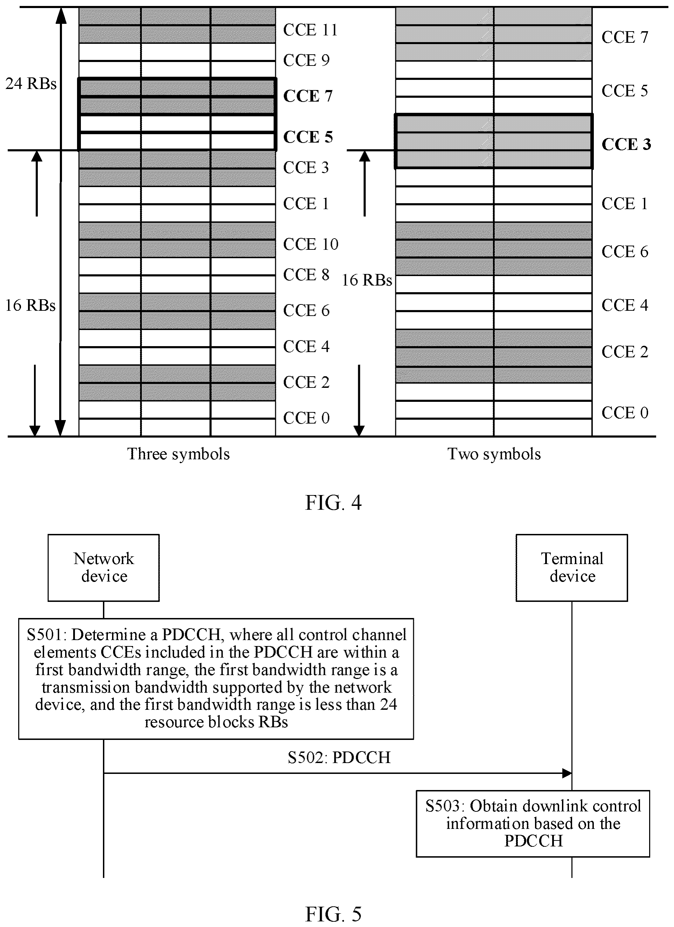

In a narrowband private network spectrum, if the existing CCE-REG interleaved mapping relationship in the CORESET #0 is reused, a CCE corresponding to a PDCCH may exceed a bandwidth range, causing receiving performance of the PDCCH to deteriorate. FIG. 4 is a diagram of puncturing a CCE in a private network spectrum. When a quantity of time domain symbols occupied by a CORESET is 3, and a maximum supported AL is 8, a PDCCH corresponds to a CCE 0 to a CCE 7. A CCE 5 and the CCE 7 exceed a bandwidth range of 16 RBs, and therefore the CCE 5 and the CCE 7 are punctured (puncture), that is, a network device does not send the CCE 5 and the CCE 7. Compared with legacy (legacy) complete transmission, the two punctured CCEs cause receiving performance of the PDCCH to decrease by 3.25 dB. Similarly, when a quantity of time domain symbols occupied by a CORESET is 2, and a maximum supported AL is 4, a PDCCH corresponds to a CCE 0 to a CCE 3. The CCE 3 exceeds a bandwidth range of 16 RBs, and therefore the CCE 3 is punctured. The network device does not send the CCE 3, which also causes receiving performance of the PDCCH to deteriorate.

To resolve the foregoing technical problem, embodiments of this application provide the following solutions.

To adapt to a channel bandwidth of a private network spectrum or a quantity of available RBs of a channel, a possible manner is to puncture (or shorten) an SSB or a CORESET #0. For example, the SSB is punctured to obtain an SSB of 12 RBs, or the CORESET #0 is punctured to obtain a CORESET #0 of 15 RBs. The SSB of 12 RBs may be applicable to a 3 MHz channel and a 5 MHz channel, and the CORESET #0 of 15 RBs may be applicable to a channel whose quantity of available RBs is 15 in the 3 MHz channel and the 5 MHz channel.

In another possible manner, puncturing may not be performed, and a CORESET #0 that is adapted to the channel bandwidth of the private network spectrum or the quantity of available RBs of the channel is directly determined. For example, a CORESET #0 of 12 RBs may be directly determined, where the CORESET #0 of 12 RBs may be applicable to a 3 MHz channel, including channels whose quantities of available RBs are 15 and 12, and may also be applicable to a 5 MHz channel.

It should be understood that embodiments of this application protect a result obtained after puncturing, and a network device or a terminal device may not perform a puncturing action. An SSB (or a CORESET #0) before puncturing may be understood as the foregoing complete SSB (or CORESET #0). An SSB (or CORESET #0) after puncturing may be understood as an SSB (or CORESET #0) determined based on the SSB (or CORESET #0) before puncturing, or may be understood as a part of the SSB (or CORESET #0) before puncturing. A network may perform sending based on the SSB (or CORESET #0) before puncturing, and the terminal device may perform receiving based on the SSB (or CORESET #0) after puncturing. Certainly, the network may alternatively perform sending based on the SSB (or CORESET#0) after puncturing.

In a possible implementation, the SSB after puncturing may be a part, in the SSB before puncturing, that is consecutive in frequency domain. Specifically, the SSB after puncturing may be a part in the SSB before puncturing with $a_1$ RBs with highest frequencies and $a_2$ RBs with lowest frequencies removed, where $a_1$ and $a_2$ are integers greater than or equal to 0, and a sum of $a_1$ and $a_2$ is equal to a difference between a quantity of RBs of the SSB before puncturing and a quantity of RBs of the SSB after puncturing. Further, the SSB after puncturing may be a part with a center position in frequency domain in the SSB before puncturing, that is, $a_1$ is equal to $a_2$. For example, the SSB before puncturing is an SSB of 20 RBs, and the SSB after puncturing is an SSB of 12 RBs. In an implementation, the SSB of 12 RBs is a part in the SSB of 20 RBs with 4 RBs with highest frequencies and 4 RBs with lowest frequencies removed. Specifically, the SSB of 12 RBs may occupy subcarriers whose subcarrier numbers are 48 to 191, or the terminal device does not expect to receive an SSB on subcarriers whose subcarrier numbers are 0 to 47 and 192 to 239.

In a possible implementation, the CORESET #0 after puncturing may be a part, in the CORESET #0 before puncturing, that is consecutive in frequency domain. Specifically, the CORESET #0 after puncturing may be a part in the CORESET #0 before puncturing with $b_1$ RBs with highest frequencies and $b_2$ RBs with lowest frequencies removed, where $b_1$ and $b_2$ are integers greater than or equal to 0, and a sum of $b_1$ and $b_2$ is equal to a difference between a quantity of RBs of the CORESET #0 before puncturing and a quantity of RBs of the CORESET #0 after puncturing. Different combinations of values of $b_1$ and $b_2$ may correspond to different puncturing manners. A CORESET #0 of 15 RBs is a part in a CORESET #0 of 24 RBs with $b_1$ RBs with highest frequencies and $b_2$ RBs with lowest frequencies removed. Value ranges of $b_1$ and $b_2$ are integers from 0 to 9, and a sum of $b_1$ and $b_2$ is 9. There are 10 possible value combinations of $b_1$ and $b_2$, that is, there are a maximum of 10 possible puncturing manners. It may be understood that the foregoing puncturing manner of the CORESET #0 is also applicable to another type of CORESET.

In embodiments of this application, for a CORESET (or an SSB) that needs to be punctured, a bandwidth of the CORESET (or SSB) is a quantity of RBs after puncturing, and a CORESET corresponding to a parameter configuration is a CORESET after puncturing; and for a CORESET (or an SSB) that does not need to be punctured, a bandwidth of the CORESET (or SSB) and a quantity of RBs actually occupied by the CORESET (or SSB) correspond to a same quantity of physical resources. Unless otherwise specified, a quantity of RBs in the following descriptions may be a quantity of RBs before puncturing, or may be a quantity of RBs after puncturing. This is not limited.

FIG. 5 is a schematic flowchart of a communication method according to an embodiment of this application. The method mainly includes the following steps.

S501: A network device determines a PDCCH, where all control channel elements CCEs included in the PDCCH are within a first bandwidth range, the first bandwidth range is a transmission bandwidth supported by the network device, and the first bandwidth range is less than 24 resource blocks RBs.

It should be noted that, the PDCCH herein may also be understood as a PDCCH candidate, and the PDCCH is uniformly used for description below.

The first bandwidth range may alternatively be a channel bandwidth supported by the network device. That all the CCEs included in the PDCCH are within the first bandwidth range may be understood as that all RBs included in the CCE are within the first bandwidth range. Counted based on a bandwidth, the first bandwidth range may be a transmission bandwidth of 3.6 MHz, 2.88 MHz, 2.7 MHz, or 2.16 MHz. Counted based on a quantity of RBs, the first bandwidth range may be 20, 16, 15, or 12 RBs. Counted based on a quantity of subcarriers, the first bandwidth range may be 240, 192, 180, or 144 subcarriers.

Optionally, the network device determines the first bandwidth range based on two parameters: a quantity R of rows and a quantity C of columns that are of an interleaver. The first bandwidth range corresponds to a quantity of effective frequency domain RBs. Optionally, R=2 and C=4, or R=2 and C=3. When a quantity of time domain symbols occupied by a CORESET #0 is 3, it may be further determined based on R=2 and C=4 that a quantity of frequency domain RBs occupied by the CORESET #0 is 15 or 16, that is, the first bandwidth range is 15 RBs or 16 RBs. When a quantity of time domain symbols occupied by a CORESET #0 is 2, it may also be further determined based on R=2 and C=3 that a quantity of frequency domain RBs occupied by the CORESET #0 is 15 or 16, that is, the first bandwidth range is 15 RBs or 16 RBs.

Optionally, the network device may also determine the quantity R of rows and the quantity C of columns of the interleaver based on the first bandwidth range, to obtain a mapping relationship between REG bundling and the CCE based on the quantity R of rows and the quantity C of columns of the interleaver. The first bandwidth range corresponds to the quantity of effective frequency domain RBs. For example, when the quantity of time domain symbols occupied by the CORESET #0 is 3, and the quantity of effective frequency domain RBs is 15 or 16, it may be further determined based on the quantity R of rows=2 that C=4. For another example, when the quantity of time domain symbols occupied by the CORESET #0 is 2, and the quantity of effective frequency domain RBs is 15 or 16, it may be further determined based on the quantity R of rows=2 that C=3.

The CCE corresponding to the PDCCH is included in the control resource set CORESET #0, or may be included in another control resource set.

In this embodiment of this application, a correspondence between the PDCCH and the CCE may be redefined between the network device and a terminal device, so that all the CCEs included in the PDCCH are within the first bandwidth range. Specifically, the following several implementations are included.

In a first implementation, the PDCCH corresponds to X CCEs, the X CCEs are X consecutive CCEs starting from a first CCE in a frequency increasing direction, X is an aggregation level of the PDCCH, and the first CCE may be a start CCE of the X CCEs included in the PDCCH.

For the CORESET #0, when the quantity of time domain symbols occupied by the CORESET #0 is 3, the first CCE may be a CCE 0 and a CCE 8; or when the quantity of time domain symbols occupied by the CORESET #0 is 2, the first CCE may be a CCE 0 or a CCE 4. For the another CORESET, the first CCE may be any CCE in all CCEs. For example, the first CCE may be a CCE 0, a CCE 1, a CCE 2, or a CCE 3.

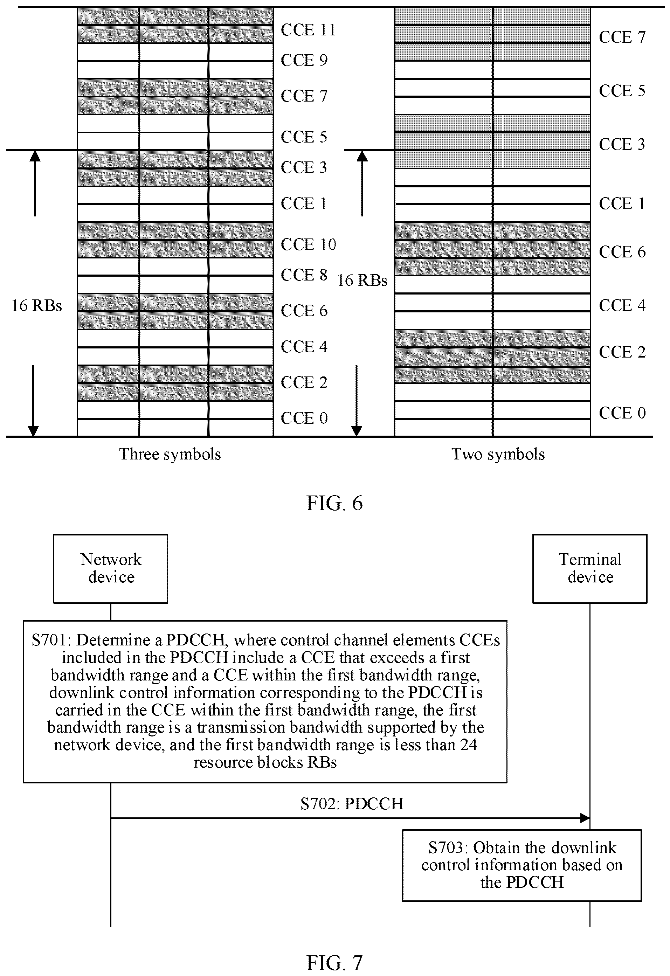

For example, FIG. 6 is a diagram of distribution of CCEs within 16 RBs. For the CORESET #0, when the quantity of time domain symbols occupied by the CORESET #0 is 2, if the first CCE is the CCE 0, and X of the PDCCH is equal to 4, the X CCEs corresponding to the PDCCH sequentially include the CCE 0, a CCE 2, a CCE 4, and a CCE 6 in a frequency direction from bottom to top, where the CCE 0, the CCE 2, the CCE 4, and the CCE 6 are all within the 16 RBs. For another example, when the quantity of time domain symbols occupied by the CORESET #0 is 3, if the first CCE is the CCE 0, and X of the PDCCH is equal to 8, the X CCEs corresponding to the PDCCH sequentially include the CCE 0, a CCE 2, the CCE 4, a CCE 6, a CCE 8, a CCE 10, a CCE 1, and a CCE 3 in a frequency direction from bottom to top, where the CCE 0, CCE 2, CCE 4, CCE 6, CCE 8, CCE 10, the CCE 1, and the CCE 3 are all within the 16 RBs.

For the another CORESET, when a quantity of time domain symbols occupied by the another CORESET is 2, if the first CCE is the CCE 2, and X of the PDCCH is equal to 4, the X CCEs corresponding to the PDCCH include the CCE 2, a CCE 4, a CCE 6, and the CCE 1, where the CCE 2, the CCE 4, the CCE 6, and the CCE 1 are all within the 16 RBs. For another example, when a quantity of time domain symbols occupied by the another CORESET is 3, if the first CCE is the CCE 2, and X of the PDCCH is equal to 4, the X CCEs corresponding to the PDCCH include the CCE 2, a CCE 4, a CCE 6, and a CCE 8, where the CCE 4, the CCE 6, the CCE 8, and the CCE 10 are all within the 16 RBs. However, if the first CCE is the CCE 2, and X of the PDCCH is equal to 8, the X CCEs corresponding to the PDCCH include the CCE 2, a CCE 4, a CCE 6, a CCE 8, a CCE 10, the CCE 1, the CCE 3, and a CCE 5, where the CCE 2, the CCE 4, the CCE 6, the CCE 8, the CCE 10, the CCE 1, and the CCE 3 are within the 16 RBs, and the CCE 5 exceeds the 16 RBs. Therefore, when the quantity of time domain symbols occupied by the another CORESET is 3, if X of the PDCCH is equal to 8, that the X CCEs corresponding to the PDCCH are all within the 16 RBs can only be ensure when the first CCE is the CCE 0.

In a second implementation, the PDCCH corresponds to X CCEs, the X CCEs are determined starting from a first CCE in ascending order of CCE numbers, the X CCEs do not include a CCE outside the first bandwidth range, and X is an aggregation level of the PDCCH. The first CCE is described above, and details are not described herein again. Specifically, the following several manners are included.

When the first bandwidth range is not exceeded, the X CCEs may be determined starting from the first CCE in ascending order of CCE numbers. For example, as shown in FIG. 6, when the quantity of time domain symbols occupied by the CORESET #0 is 3, if the first CCE is a CCE 0, and X of the PDCCH is equal to 4, the X CCEs corresponding to the PDCCH include the CCE 0, a CCE 1, a CCE 2, and a CCE 3, where the CCE 0, the CCE 1, the CCE 2, and the CCE 3 are all within the 16 RBs.

When the first bandwidth range is exceeded, the CCEs may be determined starting from the first CCE in ascending order of CCE numbers. If a specific CCE exceeds the first bandwidth range, the CCE is skipped, and a next CCE is determined until the X CCEs are determined. For example, as shown in FIG. 6, when the quantity of time domain symbols occupied by the CORESET #0 is 3, if the first CCE is a CCE 0, and X of the PDCCH is equal to 8, the CCE 0, a CCE 1, a CCE 2, a CCE 3, and a CCE 4 may be first determined, where the CCE 0, the CCE 1, the CCE 2, the CCE 3, and the CCE 4 are all within the 16 RBs. When a CCE 5 is determined, the CCE 5 exceeds the 16 RBs, and therefore the CCE 5 is skipped, and a next CCE 6 is determined. The CCE 6 is within the 16 RBs, and therefore the CCE 6 is selected. According to the foregoing manner, determining continues until eight CCEs are selected. The eight CCEs sequentially include the CCE 0, the CCE 1, the CCE 2, the CCE 3, the CCE 4, the CCE 6, a CCE 8, and a CCE 10.

When the first bandwidth range is exceeded, X-N CCEs may be determined starting from the first CCE in ascending order of CCE numbers, and N CCEs may be obtained by adding 1 to numbers of CCEs that exceed the first bandwidth range. For example, as shown in FIG. 6, when the quantity of time domain symbols occupied by the CORESET #0 is 3, if the first CCE is a CCE 0, and X of the PDCCH is equal to 8, the CCE 0, a CCE 1, a CCE 2, a CCE 3, and a CCE 4 may be first determined, where the CCE 0, the CCE 1, the CCE 2, the CCE 3, and the CCE 4 are all within the 16 RBs. When a CCE 5 is found, the CCE 5 exceeds the 16 RBs, and therefore a CCE 6 is obtained by adding 1 to a number of the CCE 5. Searching continues. A CCE 7 also exceeds the 16 RBs, and therefore a CCE 8 is obtained by adding 1 to a number of the CCE 7. Determining continues. A CCE 9 also exceeds the 16 RBs, and therefore a CCE 10 is obtained by adding 1 to a number of the CCE 9. In this way, eight CCEs may be obtained. The eight CCEs sequentially include the CCE 0, the CCE 1, the CCE 2, the CCE 3, the CCE 4, the CCE 6, the CCE 8, and the CCE 10.

In a third implementation, the PDCCH corresponds to at least one CCE combination, each of the at least one CCE combination includes X CCEs, the X CCEs are all within the first bandwidth range, and X is an aggregation level of the PDCCH. Specifically, the following several manners are included.

For example, when the quantity of time domain symbols occupied by the CORESET is 2, and only the aggregation level X=4 is supported, the CCEs included in the PDCCH include five possible CCE combinations. As shown in Table 1, four CCEs included in the PDCCH may be CCEs {1, 2, 4, 6}, CCEs {0, 2, 4, 6}, CCEs {0, 1, 4, 6}, CCEs {0, 1, 2, 6}, or CCEs {0, 1, 2, 4}. The network device and the terminal device may select any one of the CCE combinations as a valid CCE combination.

Table 1

| X | PDCCH |
|---|---|
| 4 | CCEs {1, 2, 4, 6}, CCEs {0, 2, 4, 6}, CCEs {0, 1, 4, 6}, CCEs {0, 1, 2, 6}, CCEs {0, 1, 2, 4} |

When the quantity of time domain symbols occupied by the CORESET is 3, only the aggregation level X=4 or X=8 is supported. When X=4, all CCEs in the control resource set are divided into two PDCCHs, and the two PDCCHs may be simultaneously sent when the two PDCCHs do not overlap at all. CCEs included in the two PDCCHs include a combination of $C_8^4/2=35$ possible CCE combinations. As shown in Table 2, two groups of CCEs included in the two PDCCHs may be {CCEs {0, 1, 2, 3}, CCEs {4, 6, 8, 10}}, {CCEs {0, 1, 4, 6}, CCEs {2, 3, 8, 10}}, {CCEs {0, 1, 8, 10}, CCEs {2, 3, 4, 6}}, {CCEs {0, 2, 4, 8}, CCEs {1, 3, 6, 10}}, .... The network device and the terminal device may select any two CCE combinations whose numbers do not overlap as valid CCE combinations.

When X=8, the CCEs included in the PDCCH include one possible CCE combination. As shown in Table 2, eight CCEs included in the PDCCH may be CCEs {0, 1, 2, 3, 4, 6, 8, 10}. The network device and the terminal device can select only the CCE combination as a valid CCE combination.

Table 2

| X | PDCCH |
|---|---|
| 4 | {CCEs {0, 1, 2, 3}, CCEs {4, 6, 8, 10}}, {CCEs {0, 1, 4, 6}, CCEs {2, 3, 8, 10}}, ... |
| 8 | CCEs {0, 1, 2, 3, 4, 6, 8, 10} |

It should be noted that, in addition to the foregoing three implementations, another implementation may also be used. Any implementation that can enable all the CCEs included in the PDCCH to be within the first bandwidth range falls within the protection scope of this application.

In this embodiment of this application, not only that X of the PDCCH is equal to 4 or 8 can be supported, but also that X of the PDCCH is equal to 5 or 7 can be supported. For example, when a network bandwidth is less than 5 MHz or a quantity of RBs is 20, 16, 15, or 12, the CORESET #0 may support X being equal to 5. According to the foregoing implementations, all the CCEs included in the PDCCH are within the first bandwidth range. As shown in FIG. 6, when the quantity of time domain symbols occupied by the PDCCH is 2, according to the first implementation, starting from a CCE 0, five CCEs corresponding to the PDCCH sequentially include the CCE 0, a CCE 2, a CCE 4, a CCE 6, and a CCE 1, where the CCE 0, the CCE 2, the CCE 4, the CCE 6, and the CCE 1 are all within the 16 RBs. According to the second implementation, starting from a CCE 0, five CCEs corresponding to the PDCCH sequentially include the CCE 0, a CCE 1, a CCE 2, a CCE 4, and a CCE 6, where the CCE 0, the CCE 1, the CCE 2, the CCE 4, and the CCE 6 are all within the 16 RBs. It can be learned that all the five CCEs within the 16 RBs are included in one PDCCH.

For another example, when the first bandwidth range is 15 RBs, the CORESET #0 may support X being equal to 7. When the quantity of time domain symbols occupied by the PDCCH is 3, according to the first implementation, starting from a CCE 0, seven CCEs corresponding to the PDCCH sequentially include the CCE 0, a CCE 2, a CCE 4, a CCE 6, a CCE 1, a CCE 8, and a CCE 11, where the CCE 0, the CCE 2, the CCE 4, the CCE 6, the CCE 1, the CCE 8, and the CCE 11 are all within the 15 RBs. It can be learned that all the seven CCEs in the 15 RBs are included in one PDCCH, so that receiving performance of the PDCCH is improved.

S502: The network device sends the PDCCH to the terminal device, where the PDCCH carries downlink control information.

S503: The terminal device obtains the downlink control information based on the PDCCH.

Specifically, the terminal device may determine, based on a correspondence that is between the PDCCH and the CCE and that is pre-agreed on by the terminal device and the network device, the CCE included in the PDCCH, and obtain the downlink control information from the CCE included in the PDCCH.

Optionally, the network device may send indication information to the terminal device, where the indication information indicates a manner of determining the PDCCH and the CCE. The determining manner may be any one or more of the first implementation to the third implementation. Further, the network device may send a primary synchronization signal and a secondary synchronization signal to the terminal device. After receiving the primary synchronization signal and the secondary synchronization signal, the terminal device determines the indication information based on a relative position between the primary synchronization signal and the secondary synchronization signal, so that signaling overheads are reduced. Alternatively, the terminal device determines the indication information based on a reserved cell identifier included in a received primary synchronization signal and a received secondary synchronization signal, so that signaling overheads can also be reduced. The reserved cell identifier is an identifier that is not allocated to an existing cell in a private network. The reserved cell identifier may be a single cell identifier, or may be a group of cell identifiers. The terminal device may determine the correspondence between the PDCCH and the CCE based on the indication information, and obtain the downlink control information from the CCE included in the PDCCH.

In this embodiment of this application, in a narrowband private network spectrum, the correspondence between the PDCCH and the CCE is redefined, so that all the CCEs included in the PDCCH are within the first bandwidth range. In this way, the network device can send all the CCEs carrying the downlink control information, so that the terminal device can completely receive the downlink control information. Therefore, the receiving performance of the PDCCH is improved.

FIG. 7 is a schematic flowchart of another communication method according to an embodiment of this application. The method mainly includes the following steps.

S701: A network device determines a PDCCH, where control channel elements CCEs included in the PDCCH include a CCE that exceeds a first bandwidth range and a CCE within the first bandwidth range, downlink control information corresponding to the PDCCH is carried in the CCE within the first bandwidth range, the first bandwidth range is a transmission bandwidth supported by the network device, and the first bandwidth range is less than 24 resource blocks RBs.

The first bandwidth range may alternatively be a channel bandwidth supported by the network device. Counted based on a bandwidth, the first bandwidth range may be a transmission bandwidth of 3.6 MHz, 2.88 MHz, 2.7 MHz, or 2.16 MHz. Counted based on a quantity of RBs, the first bandwidth range may be 20, 16, 15, or 12 RBs. Counted based on a quantity of subcarriers, the first bandwidth range may be 240, 192, 180, or 144 subcarriers.

Optionally, the network device determines the first bandwidth range based on two parameters: a quantity R of rows and a quantity C of columns that are of an interleaver. Optionally, R=2 and C=4, or R=2 and C=3. When a quantity of time domain symbols occupied by a CORESET #0 is 3, it may be further determined based on R=2 and C=4 that a quantity of frequency domain RBs occupied by the CORESET #0 is 15 or 16, that is, the first bandwidth range is 15 RBs or 16 RBs. When a quantity of time domain symbols occupied by a CORESET #0 is 2, it may also be further determined based on R=2 and C=3 that a quantity of frequency domain RBs occupied by the CORESET #0 is 15 or 16, that is, the first bandwidth range is 15 RBs or 16 RBs.

Optionally, the network device may also determine the quantity R of rows and the quantity C of columns of the interleaver based on the first bandwidth range, to obtain a mapping relationship between REG bundling and the CCE based on the quantity R of rows and the quantity C of columns of the interleaver. The first bandwidth range corresponds to a quantity of effective frequency domain RBs. For example, when the quantity of time domain symbols occupied by the CORESET #0 is 3, and the quantity of effective frequency domain RBs is 15 or 16, it may be further determined based on the quantity R of rows=2 that C=4. For another example, when the quantity of time domain symbols occupied by the CORESET #0 is 2, and the quantity of effective frequency domain RBs is 15 or 16, it may be further determined based on the quantity R of rows=2 that C=3.

The CCE corresponding to the PDCCH is included in the control resource set CORESET #0, or may be included in another control resource set.

Specifically, an encoded bit of the downlink control information is mapped to a time-frequency resource unit corresponding to X-M CCEs, where X is an aggregation level of the PDCCH, M is a quantity of CCEs that exceed the first bandwidth range, the time-frequency resource unit may be a subcarrier, and M is an integer greater than or equal to 0. When a quantity of bits of the downlink control information remains unchanged after encoding, the encoded bit of the downlink control information is mapped to a subcarrier corresponding to the X-M CCEs within the first bandwidth range, so that a bit rate is improved.

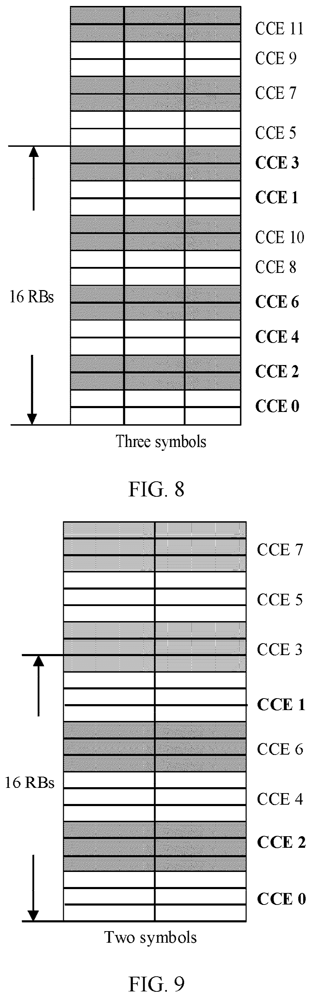

For example, FIG. 8 is a diagram of rate matching. When the quantity of time domain symbols occupied by the CORESET #0 is 3 and the aggregation level X=8, according to an existing correspondence, the PDCCH corresponds to a CCE 0 to a CCE 7. Therefore, the downlink control information needs to be mapped to the CCE 0 to the CCE 7. However, because a CCE 5 and the CCE 7 exceed a bandwidth range of 16 RBs, the CCE 5 and the CCE 7 are punctured (puncture), that is, the network device does not send the CCE 5 and the CCE 7. Therefore, receiving performance of the PDCCH is affected. In this embodiment of this application, the downlink control information originally mapped to the CCE 0 to the CCE 7 is mapped, in a rate matching manner, to six CCEs (in bold): the CCE 0, a CCE 01, a CCE 2, a CCE 3, a CCE 4, and a CCE 6, but is not mapped to the CCE 5 and the CCE 7. When the quantity of bits of the downlink control information remains unchanged after encoding, encoded bits of the downlink control information are mapped to time-frequency resource units corresponding to the six CCEs.

For another example, FIG. 9 is another diagram of rate matching. When the quantity of time domain symbols occupied by the CORESET #0 is 2 and the aggregation level X=4, according to an existing correspondence, the PDCCH corresponds to a CCE 0 to a CCE 3. Therefore, the downlink control information needs to be mapped to the CCE 0 to the CCE 3. However, because the CCE 3 exceeds a bandwidth range of 16 RBs, the CCE 3 is punctured (puncture), that is, the network device does not send the CCE 3. Therefore, receiving performance of the PDCCH is affected. In this embodiment of this application, the downlink control information originally mapped to the CCE 0 to the CCE 3 is mapped to the CCE 0, a CCE 01, and a CCE 2 (in bold) in a rate matching manner, but is not mapped to the CCE 3. When the quantity of bits of the downlink control information remains unchanged after encoding, encoded bits of the downlink control information are mapped to time-frequency resource units corresponding to the three CCEs.

It should be noted that rate matching is not only applicable to the existing correspondence between the PDCCH and the CCE, but also applicable to the redefined correspondence between the PDCCH and the CCE in the previous embodiment. When not all CCEs included in the PDCCH are within the first bandwidth range, the downlink control information is mapped in the rate matching manner. For example, the PDCCH corresponds to X CCEs, and the X CCEs are X consecutive CCEs starting from a first CCE in a frequency increasing direction. X is an aggregation level of the PDCCH.

For the another CORESET (non-CORESET #0), the first CCE may be any CCE in all the CCEs.

As shown in FIG. 6, according to the redefined correspondence between the PDCCH and the CCE, when a quantity of time domain symbols occupied by the CORESET is 3, if the first CCE is a CCE 2, and X of the PDCCH is equal to 8, eight CCEs corresponding to the PDCCH include the CCE 2, a CCE 4, a CCE 6, a CCE 8, a CCE 10, a CCE 1, a CCE 3, and a CCE 5, where the CCE 2, the CCE 4, the CCE 6, the CCE 8, the CCE 10, the CCE 1, and the CCE 3 are within 16 RBs, and the CCE 5 exceeds the 16 RBs. Therefore, when the quantity of bits of the downlink control information remains unchanged after encoding, the downlink control information originally mapped to the CCE 2, the CCE 4, the CCE 6, the CCE 8, the CCE 10, the CCE 1, the CCE 3, and the CCE 5 is mapped to the CCE 2, the CCE 4, the CCE 6, the CCE 8, the CCE 10, the CCE 1, and the CCE 3, but is not mapped to the CCE 5.

For another example, when a quantity of time domain symbols occupied by the CORESET is 2, if the first CCE is a CCE 4, and X of the PDCCH is equal to 4, four CCEs corresponding to the PDCCH include the CCE 4, a CCE 6, a CCE 1, and a CCE 3, where the CCE 4, the CCE 6, and the CCE 1 are within 16 RBs, and the CCE 3 exceeds the 16 RBs. Therefore, when the quantity of bits of the downlink control information remains unchanged after encoding, the downlink control information originally mapped to the CCE 4, the CCE 6, the CCE 1, and the CCE 3 may be mapped to the CCE 4, the CCE 6, and the CCE 1, but is not mapped to the CCE 3.

In this embodiment of this application, not only that X of the PDCCH is equal to 4 or 8 can be supported, but also that X of the PDCCH is equal to 5 or 7 can be supported. For example, when a network bandwidth is less than 5 MHz or a quantity of RBs is 20, 16, 15, or 12, the CORESET may support X being equal to 5. As shown in FIG. 6, when the quantity of time domain symbols occupied by the PDCCH is 2, according to the redefined correspondence between the PDCCH and the CCE, starting from a CCE 2, five CCEs corresponding to the PDCCH sequentially include the CCE 2, a CCE 4, a CCE 6, a CCE 1, and a CCE 3, where the CCE 2, the CCE 4, the CCE 6, and the CCE 1 are all within the 16 RBs, and the CCE 3 exceeds the 16 RBs. Therefore, when the quantity of bits of the downlink control information remains unchanged after encoding, the downlink control information originally mapped to the CCE 4, the CCE 6, the CCE 1, and the CCE 3 is mapped to the CCE 4, the CCE 6, and the CCE 1, but is not mapped to the CCE 3.

For another example, when the first bandwidth range is 15 RBs, the CORESET may support X being equal to 7. When the quantity of time domain symbols occupied by the PDCCH is 3, according to the redefined correspondence between the PDCCH and the CCE, starting from a CCE 2, seven CCEs corresponding to the PDCCH sequentially include the CCE 2, a CCE 4, a CCE 6, a CCE 1, a CCE 8, a CCE 11, and a CCE 3, where the CCE 0, the CCE 2, the CCE 4, the CCE 6, the CCE 1, the CCE 8, and the CCE 11 are all within the 15 RBs, and the CCE 3 exceeds 16 RBs. Therefore, when the quantity of bits of the downlink control information remains unchanged after encoding, the downlink control information originally mapped to the CCE 2, the CCE 4, the CCE 6, the CCE 1, the CCE 8, the CCE 11, and the CCE 3 is mapped to the CCE 0, the CCE 2, the CCE 4, the CCE 6, the CCE 1, the CCE 8, and the CCE 11, but is not mapped to the CCE 3.

Optionally, when a reference signal received measurement result of a terminal device is greater than a first threshold, the downlink control information corresponding to the PDCCH may be carried in the CCE within the first bandwidth range. The reference signal received measurement result may be reference signal received power (reference signal received power, RSRP), reference signal received quality (reference signal received quality, RSRP), a signal-to-noise ratio of a reference signal, or the like. The first threshold may be preset, or may be obtained by performing average calculation or weighted average calculation based on a plurality of measurement results obtained based on a measurement frame. In this way, mapping in the rate matching manner is allowed only when measured signal quality of a cell is good.

Optionally, when a ratio of a quantity of CCEs within the first bandwidth range to a quantity of CCEs corresponding to the PDCCH is greater than a second threshold, the downlink control information corresponding to the PDCCH may be carried in the CCE within the first bandwidth range. The second threshold may be 3/4 or the like.

For example, as shown in FIG. 6, when the quantity of time domain symbols occupied by the CORESET is 3, if the first CCE is a CCE 2, and X of the PDCCH is equal to 8, CCEs, included in the PDCCH, within the first bandwidth range include seven CCEs: the CCE 2, a CCE 4, a CCE 6, a CCE 8, a CCE 10, a CCE 1, and a CCE 3, and a CCE, included in the PDCCH, that exceeds the first bandwidth range includes a CCE 5. It is obtained through calculation that the ratio of the quantity of CCEs within the first bandwidth range to the quantity of CCEs corresponding to the PDCCH is 7/8, and 7/8 is greater than 3/4. Therefore, the downlink control information corresponding to the PDCCH may be carried in the CCEs within the first bandwidth range. For another example, as shown in FIG. 6, when the quantity of time domain symbols occupied by the CORESET is 2, if the first CCE is a CCE 6, and X of the PDCCH is equal to 4, CCEs within the first bandwidth range include two CCEs: the CCE 6 and a CCE 1, and CCEs that exceed the first bandwidth range include two CCEs: a CCE 3 and a CCE 5. It is obtained through calculation that the ratio of the quantity of CCEs within the first bandwidth range to the quantity of CCEs corresponding to the PDCCH is 1/2, and 1/2 is less than 3/4. Therefore, the downlink control information corresponding to the PDCCH is prohibited from being carried in the CCEs within the first bandwidth range.

Optionally, when the reference signal received measurement result of the terminal device is greater than the first threshold, and the ratio of the quantity of CCEs within the first bandwidth range to the quantity of CCEs corresponding to the PDCCH is greater than the second threshold, the downlink control information corresponding to the PDCCH may be carried in the CCE within the first bandwidth range. For details, refer to the foregoing descriptions. Details are not described herein again.

S702: The network device sends the PDCCH to the terminal device, where the PDCCH carries the downlink control information.

S703: The terminal device obtains the downlink control information based on the PDCCH.

Specifically, the terminal device may determine, based on a correspondence that is between the PDCCH and the CCE and that is pre-agreed on by the terminal device and the network device, the CCE included in the PDCCH, and obtain the downlink control information from the CCE included in the PDCCH.

Optionally, the network device may send indication information to the terminal device, where the indication information indicates a manner of determining the PDCCH and the CCE. The determining manner may be the existing correspondence between the PDCCH and the CCE, or may be the redefined correspondence between the PDCCH and the CCE. Further, the network device may send a primary synchronization signal and a secondary synchronization signal to the terminal device. After receiving the primary synchronization signal and the secondary synchronization signal, the terminal device determines the indication information based on a relative position between the primary synchronization signal and the secondary synchronization signal, so that signaling overheads are reduced. Alternatively, the terminal device determines the indication information based on a reserved cell identifier included in a received primary synchronization signal and a received secondary synchronization signal, so that signaling overheads can also be reduced. The reserved cell identifier is an identifier that is not allocated to an existing cell in a private network. The reserved cell identifier may be a single cell identifier, or may be a group of cell identifiers. The terminal device may determine the correspondence between the PDCCH and the CCE based on the indication information, and obtain the downlink control information from the CCE included in the PDCCH.

In this embodiment of this application, in a narrowband private network spectrum, the downlink control information corresponding to the PDCCH is carried in the CCE within the first bandwidth range, so that all CCEs carrying the downlink control information are within the first bandwidth range, and the terminal device can completely receive the downlink control information. Therefore, receiving performance of the PDCCH is improved.

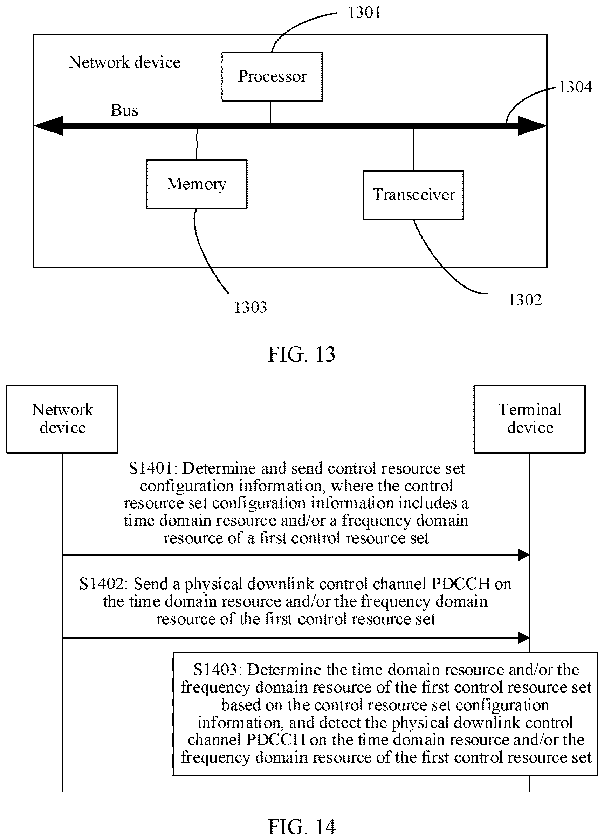

FIG. 14 is a schematic flowchart of another communication method according to an embodiment of this application. The method mainly includes the following steps.

S1401: A network device determines and sends control resource set configuration information, where the control resource set configuration information includes a time domain resource and/or a frequency domain resource of a first control resource set.

The first control resource set may be an existing CORESET #0, or may be a CORESET #0 redefined according to the foregoing embodiment.

In a possible design, X of a PDCCH supports only 4. X represents an aggregation level of the PDCCH. It may be understood that in a narrowband private network spectrum, X supports only 4. In this design, simultaneous transmission of a maximum of two pieces of downlink control information can be supported in the CORESET #0, so that a network capacity is improved.

In a possible design, the control resource set configuration information includes first indication information and/or second indication information. The first indication information indicates a quantity of time domain symbols included in the first control resource set. The second indication information indicates a quantity of frequency domain RBs occupied by the first control resource set and/or a first offset. The first offset is an offset between a smallest RB index of the first control resource set and a smallest RB index of a synchronization signal and PBCH block (synchronization signal and PBCH block, SSB). The quantity of frequency domain RBs occupied by the first control resource set and/or the first offset are/is shown in Table 3 or Table 4.

In a possible design, the control resource set configuration information includes the first indication information and the second indication information, and the first indication information and the second indication information may be carried in different information elements of a master information block MIB and/or physical layer additional bits of a system message.

In a possible design, a bit occupied by the first indication information may be some or all bits occupied by a first information element in a master information block (master information block, MIB), and the first information element may be at least one of subCarrierSpacingCommon, dmrs-TypeA-Position, and pdcch-ConfigSIB1.

In a possible design, the control resource set configuration information includes the first indication information and the second indication information, and the first indication information and the second indication information may be carried in a pdcch-configsib1 information element of a master information block MIB.

The first offset offset is an integer greater than or equal to -5 and less than or equal to 9. Alternatively, the first offset offset is an integer greater than or equal to -5 and less than or equal to 0. Alternatively, the first offset offset is an integer greater than or equal to 0 and less than or equal to 9. When a transmission bandwidth of a narrowband private network is less than 5 MHz, for example, 3 MHz, corresponding frequency domain resources are 15 RBs. According to a definition in the existing NR Rel-17, when a subcarrier spacing is 15 kHz, an SSB occupies 20 RBs, and a CORESET #0 occupies 24 RBs. To facilitate network deployment, both the SSB and the CORESET #0 may satisfy that a start resource position is aligned with an upper boundary of a private network or an end resource position is aligned with a lower boundary of the private network. Therefore, an offset between start resource positions of the SSB and the CORESET #0 may be an integer from -5 to 9. Only three values 0, 2, and 4 are defined in an existing protocol, and an added value may indicate a complete offset range.

In a possible design, a quantity of frequency domain resource RBs occupied by the first control resource set is less than or equal to a first bandwidth range. The first bandwidth range does not exceed 24 RBs. The first bandwidth range may be 20, 16, 15, or 12 RBs.

Optionally, the quantity of time domain symbols included in the first control resource set is 2 or 3.

In a possible design, the control resource set configuration information includes the second indication information. The quantity of time domain symbols included in the first control resource set is a preset value. The preset value is 2 or 3.

In another possible design, a ratio of energy per RE (energy per resource element, EPRE) of data and/or a demodulation reference signal (demodulation reference signal, DMRS) of the physical downlink control channel PDCCH to EPRE of an SSS is determined based on a first ratio, and the first ratio is a ratio of a quantity of frequency domain resources corresponding to the first bandwidth range to a quantity of frequency domain resources corresponding to a second bandwidth range. The first bandwidth range is a quantity of frequency domain resources required for transmitting the physical downlink control channel PDCCH, and the first bandwidth range does not exceed 24 RBs. The second bandwidth range is 24 RBs.

Table 3

| Index sequence number | Multiplexing pattern between the SSB and the first control resource set | Quantity $N_{\mathrm{RB}}^{\mathrm{CORESET}}$ of RBs occupied in frequency domain | First offset offset (RBs) |
|---|---|---|---|
| 0 | 1 | 15 | -5 |
| 1 | 1 | 15 | -4 |
| 2 | 1 | 15 | -3 |
| 3 | 1 | 15 | -2 |
| 4 | 1 | 15 | -1 |
| 5 | 1 | 15 | 0 |
| 6 | 1 | 15 | 1 |
| 7 | 1 | 15 | 2 |
| 8 | 1 | 15 | 3 |
| 9 | 1 | 15 | 4 |
| 10 | 1 | 15 | 5 |
| 11 | 1 | 15 | 6 |
| 12 | 1 | 15 | 7 |
| 13 | 1 | 15 | 8 |
| 14 | 1 | 15 | 9 |
| 15 | Reserved | | |

Table 4

| Index sequence number | Multiplexing pattern between the SSB and the first control resource set | Quantity $N_{\mathrm{RB}}^{\mathrm{CORESET}}$ of RBs occupied in frequency domain | First offset offset (RBs) |
|---|---|---|---|
| 0 | 1 | 16 | -5 |
| 1 | 1 | 16 | -4 |
| 2 | 1 | 16 | -3 |

(continued)

| Index sequence number | Multiplexing pattern between the SSB and the first control resource set | Quantity $N_{RB}^{CORESET}$ of RBs occupied in frequency domain | First offset offset (RBs) |
|---|---|---|---|
| 3 | 1 | 16 | -2 |
| 4 | 1 | 16 | -1 |
| 5 | 1 | 16 | 0 |
| 6 | 1 | 16 | 1 |
| 7 | 1 | 16 | 2 |
| 8 | 1 | 16 | 3 |
| 9 | 1 | 16 | 4 |
| 10 | 1 | 16 | 5 |
| 11 | 1 | 16 | 6 |
| 12 | 1 | 16 | 7 |
| 13 | 1 | 16 | 8 |
| 14 | 1 | 16 | 9 |
| 15 | Reserved | | |

In another possible design, the master information block (master information block, MIB) carries the quantity of time domain symbols included in the first control resource set.

In a possible design, the first indication information or the second indication information is carried in a "subCarrierSpacingCommon" information element in the MIB. In this case, a subcarrier spacing between the PDCCH for scheduling a SIB 1 and a PDSCH for carrying the SIB 1 is fixed to 15 kHz. In a private network scenario, frequency division duplex (frequency division duplex, FDD) and 15 kHz subcarrier spacing scenarios are mainly considered. Therefore, fixing the subcarrier spacing to 15 kHz has little impact on system configuration.

In a possible design, the first indication information or second indication information is carried in a "dmrs-TypeA-Position" information element in the MIB. In this case, during type-A PDSCH mapping, a DMRS symbol position may be fixed to a symbol 3. A narrowband system bandwidth is small, and a quantity of time domain symbols of the control resource set #0 (control resource set #0, CORESET #0) may be fixed to 3, to ensure sufficient resources for transmitting the PDCCH, thereby ensuring transmission performance of the PDCCH. Correspondingly, during type-A PDSCH mapping, a DMRS symbol position may be fixed to a symbol 3.

In a possible design, the first indication information and/or the second indication information are/is carried in a "pdcch-ConfigSIB 1" information element in the MIB. Because a narrowband system bandwidth is small, some configurations of the CORESET #0 and/or a Type0-PDCCH CSS set may be predefined. For example, the quantity of RBs is predefined as a system bandwidth size, the quantity of symbols is predefined as 3, the offset (RBs) to the SSB is predefined as 0, or the multiplexing pattern between the SSB and the CORESET is predefined as 1. Optionally, some configuration parameters of the Type0-PDCCH CSS set may also be predefined, and the MIB may no longer include the pdcch-ConfigSIB 1 indicator field.

In a possible design, the first indication information and/or the second indication information are/is carried in a physical layer additional bit included in system information. An existing PBCH payload includes eight additional timing-related bits. Considering that private network frequency bands are all below 3 GHz, a maximum of four SSB beams are supported. Therefore, reserved bits $\bar{a}_{\bar{A}+6}$ and $\bar{a}_{\bar{A}+7}$ may be used to carry the first indication information and/or the second indication information, where the bits $\bar{a}_{\bar{A}+6}$ and $\bar{a}_{\bar{A}+7}$ are bits whose indexes are 6 and 7 in the eight additional timing-related bits.

In another possible design, the network device may increase power of some frequency domain resources that are occupied by the physical downlink control channel PDCCH and that are within the first bandwidth range, where a quantity of frequency domain resource RBs occupied by the physical downlink control channel PDCCH is greater than the first bandwidth range, and the first bandwidth range does not exceed 24 RBs.

Optionally, the network device sends configuration information to the terminal device. The configuration information is shown in Table 3 and Table 4.

S1402: The network device sends the physical downlink control channel PDCCH on the time domain resource and/or the frequency domain resource of the first control resource set.

S1403: The terminal device determines the time domain resource and/or the frequency domain resource of the first control resource set based on the control resource set configuration information, and detects the physical downlink control channel PDCCH on the time domain resource and/or the frequency domain resource of the first control resource set.

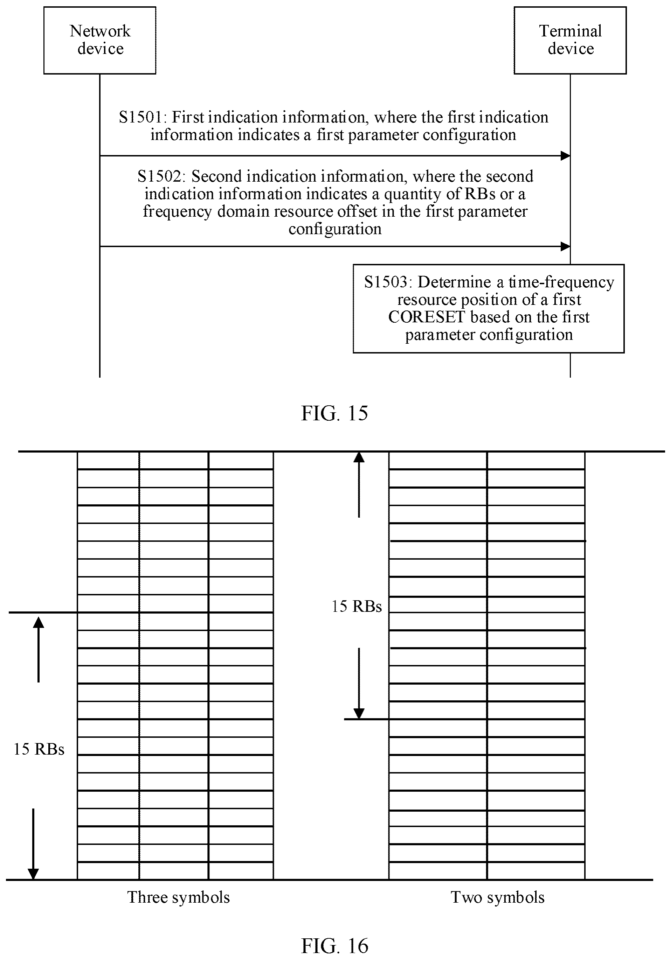

FIG. 15 is a flowchart of a communication method according to an embodiment of this application. The method mainly includes the following steps.

In the following descriptions, an example in which the method is applied to diagrams of network architectures shown in FIG. 1a and FIG. 1b is used. For ease of description, in the following descriptions, an example in which the method is performed by a network device and a terminal device is used. This embodiment of this application uses an example in which the method is applied to the network architectures shown in FIG. 1a and FIG. 1b. Therefore, the network device described below is, for example, the access network device in the network architectures shown in FIG. 1a and FIG. 1b, and the terminal device described below may be the terminal device in the network architectures shown in FIG. 1a and FIG. 1b.

S1501: The network device sends first indication information, and correspondingly, the terminal device receives the first indication information, where the first indication information indicates a first parameter configuration, the first parameter configuration is one of K parameter configurations, and K is a positive integer.

Specifically, any one of the K parameter configurations includes one or more of the following parameters, or any one of the K parameter configurations consists of one or more of the following parameters: a quantity of RBs, a frequency domain resource offset, a quantity of time domain symbols, a mapping manner (or a mapping mode), a puncturing manner (or a puncturing mode), and a multiplexing mode. For example, any one of the K parameter configurations includes the following parameters: the quantity of RBs, the frequency domain resource offset, the quantity of time domain symbols, the mapping manner, and the multiplexing mode. That the network device sends the first indication information may also mean that the network device outputs the first indication information.

The following describes the K parameter configurations and related parameters.

(1) Quantity of RBs:

The quantity of RBs is a quantity of resources occupied by a CORESET in frequency domain in a form of RBs. The quantity of RBs may be a quantity of RBs before the CORESET is punctured, or may be a quantity of RBs after the CORESET is punctured (that is, a bandwidth of the CORESET).

A value of the quantity of RBs may correspond to the bandwidth of the CORESET. If the quantity of RBs is the quantity of RBs before the CORESET is punctured, the value of the quantity of RBs is different from the bandwidth of the CORESET. If the quantity of RBs is the quantity of RBs after the CORESET is punctured, or if the CORESET is not punctured, the value of the quantity of RBs is the same as the bandwidth of the CORESET.

In an example, a possible value of the quantity of RBs is 24 or 12. If the quantity of RBs is 24, correspondingly, the bandwidth of the CORESET is 15 RBs. If the quantity of RBs is 12, correspondingly, the bandwidth of the CORESET is 12 RBs.

In another example, a possible value of the quantity of RBs is 15 or 12. If the quantity of RBs is 15, correspondingly, the bandwidth of the CORESET is 15 RBs. If the quantity of RBs is 12, correspondingly, the bandwidth of the CORESET is 12 RBs.

(2) Frequency domain resource offset:

The frequency domain resource offset (or a frequency domain resource offset of a CORESET relative to an SSB) is a quantity of RBs of an offset between a reference RB of the CORESET and a reference RB of the SSB, and may be defined in two different manners. Specifically, a first definition of the frequency domain resource offset is an offset between a smallest RB index of the CORESET and a smallest RB index of a pre- or post-puncturing SSB. A second definition of the frequency domain resource offset is an offset between a second RB ($2^{nd}$ RB) index of the CORESET and the smallest RB index of the pre- or post-puncturing SSB. Alternatively, a second definition of the frequency domain resource offset is the offset between the smallest RB index of the CORESET and the smallest RB index of the pre- or post-puncturing SSB minus 1. RB indexes are sorted in ascending order based on RB frequencies from low to high. Alternatively, the smallest index may be replaced with a lowest frequency. When no additional indication is performed, frequency domain resource offsets in the K parameter configurations use the first definition.

In another example, the SSB is an SSB of 12 RBs, and the CORESET is a CORESET of 12 RBs. There is one possible frequency domain position of the CORESET of 12 RBs in a channel whose quantity of available RBs is 12, and a corresponding frequency domain resource offset is 0.

(3) Quantity of time domain symbols:

The quantity of time domain symbols (or a quantity of time domain symbols of a CORESET) is a quantity of resources occupied by the CORESET in time domain in a form of OFDM symbols.

In an example, a value of the quantity of time domain symbols is 2 or 3.

(4) Mapping manner:

The mapping manner is the foregoing CCE-to-REG (CCE-to-REG) mapping manner. In an example, the mapping manner may be one of an interleaved manner or a non-interleaved manner.

Optionally, a mapping manner corresponding to a parameter configuration in which a quantity of RBs is 12 is the interleaved manner.

(5) Puncturing manner:

The puncturing manner (or a puncturing manner of a CORESET) includes different puncturing manners corresponding to different value combinations of $b_1$ and $b_2$. A specific puncturing manner may be specified in a predefined manner. For example, the specific puncturing manner is specified in a protocol, or values of $b_1$ and $b_2$ are specified in a protocol. For example, the protocol may specify that $b_{11}$ is 9 and $b_2$ is 0.

In NR, one RB occupies 12 subcarriers in frequency domain. The quantity of RBs and the frequency domain resource offset are in a form of an RB, and this parameter may also be in a form of another frequency domain resource. This is not limited in this application. The quantity of time domain symbols is in a form of an OFDM symbol, and this parameter may also be in a form of another time domain resource. This is not limited in this application.

In an optional manner, K is 10, 11, 12, 13, 14, 15, or 16.

In an optional manner, the K parameter configurations are used for CORESETs.

In an optional manner, the frequency domain resource offset is a frequency domain resource offset of a CORESET relative to an SSB.

In an optional manner, the quantity of time domain symbols is a quantity of symbols occupied by a CORESET in time domain.

In an optional manner, the mapping manner is an interleaved manner or a non-interleaved manner. The mapping manner is a manner of CCE-to-REG mapping in a CORESET.

In an optional manner, the multiplexing mode is a multiplexing mode between an SSB and a CORESET.

In an optional manner, the puncturing manner is a puncturing manner for a CORESET or a CORESET #0.

In an optional manner, bandwidths of the CORESETs corresponding to the K parameter configurations each are less than 24 RBs. Specifically, the bandwidths of the CORESETs corresponding to the K parameter configurations include one or more of 12 RBs and 15 RBs. For example, the bandwidths of the CORESETs corresponding to the K parameter configurations include 12 RBs and 15 RBs, or 15 RBs.

In an optional manner, a bandwidth of a CORESET corresponding to a parameter configuration in which a quantity of RBs is 24 in the K parameter configurations is 15 RBs.

In an optional manner, frequency domain resource offsets corresponding to the K parameter configurations each are a value in a first value set, and a quantity of values in the first value set is greater than 3.

In this manner, the K parameter configurations can support more frequency domain resource offsets, that is, support more frequency domain deployment positions of CORESETs, and therefore support flexible channel or network deployment.

Optionally, the first indication information may be carried in a master information block (master information block, MIB), a physical broadcast channel (physical broadcast channel, PBCH), or a broadcast message. The first indication information may be periodically sent.

Optionally, the first indication information may be N bits, and different values of the N-bit information may indicate different parameter configurations in the K parameter configurations. Further, N may be 4, and K may be an integer less than or equal to 2N. Specifically, K may be 10, 11, 12, 13, 14, 15, or 16.

Optionally, before step S1501, the network device may determine the first indication information. This step is not shown in the figure.

Optionally, before step S1501, the network device may generate a PBCH. Further, in step S1501, the network device may send the first indication information on the PBCH. This step is not shown in FIG. 15.

S1502: The network device sends second indication information, and correspondingly, the terminal device receives the second indication information. The second indication information indicates a quantity of RBs or a frequency domain resource offset in the first parameter configuration.

Optionally, the second indication information may be separately carried in a PBCH physical layer additional bit, or may be carried in a MIB and a PBCH physical layer additional bit. The second indication information may be periodically sent.

Specifically, the second indication information is carried in the PBCH physical layer additional bit. An existing PBCH payload includes eight additional timing-related bits. Considering that a subcarrier spacing supported by a private network is only 15 kHz, an actual value range of an SSB subcarrier offset $K_{SSB}$ is 0 to 11, and only four bits carried in a ssb-SubcarrierOffset field in the MIB may be used to indicate $K_{SSB}$. Therefore, a bit $\overline{a}_{\overline{A}+5}$ may be used to carry the second indication information. The SSB subcarrier offset $K_{SSB}$ is an offset between a subcarrier 0 of a common resource block and a subcarrier 0 of an SSB, and the bit $\overline{a}_{\overline{A}+5}$ is a bit whose index is 5 in the eight additional timing-related bits.

Specifically, $K_{SSB}$ jointly determined based on the MIB and the PBCH physical layer additional bit carries the second indication information. A value range of the existing SSB subcarrier offset $K_{SSB}$ is 0 to 23, and $K_{SSB}$ is jointly indicated by using a total of five bits: four bits carried in a ssb-SubcarrierOffset field in the master information block MIB and the PBCH physical layer additional bit $\overline{a}_{\overline{A}+5}$. A subcarrier spacing supported by a private network is only 15 kHz, and an actual value range of the SSB subcarrier offset $K_{SSB}$ is 0 to 11. Therefore, when a value range of $K_{SSB}$ is 12 to 23, $K_{SSB}$ may indicate a frequency domain offset of one RB.

S1503: The network device indicates a time-frequency resource position of a first CORESET (or replaced with time-frequency resource information in the first CORESET) based on the first parameter configuration. Correspondingly, the terminal device determines the time-frequency resource position of the first CORESET based on the first parameter configuration. The first CORESET may be a CORESET #0.

Specifically, the terminal device determines, in the K parameter configurations based on the first indication information, the first parameter configuration corresponding to the first indication information. Before this, the terminal device determines the K parameter configurations, and receives the first indication information. The determining step may be performed before or after the receiving step. This is not limited in this application.

Optionally, the first parameter configuration is associated with the second indication information, or the terminal device may determine the first parameter configuration based on the second indication information, or the first parameter configuration is determined based on the second indication information. For example, when a value of the second indication information is 0 or is within a range from 0 to 11, a value of the frequency domain resource offset in the first parameter configuration is a first value; or when a value of the second indication information is 1 or is within a range from 12 to 23, a value of the frequency domain resource offset in the first parameter configuration is a first value plus 1. Optionally, the first value may be 0 or 2. For another example, when a value of the second indication information is 0 or is within a range from 0 to 11, a definition of the frequency domain resource offset in the first parameter configuration is the first definition; or when a value of the second indication information is 1 or is within a range from 12 to 23, a definition of the frequency domain resource offset in the first parameter configuration is the second definition. For still another example, when a value of the second indication information is 0 or is within a range from 0 to 11, the quantity of RBs in the first parameter configuration is 12; or when a value of the second indication information is 1 or is within a range from 12 to 23, the quantity of RBs in the first parameter configuration is 15.

Optionally, when the quantity of RBs corresponding to the first parameter configuration is 24, the first parameter configuration is associated with the second indication information, or the terminal device may determine, based on the second indication information, the value of the frequency domain resource offset in the first parameter configuration, or the value of the frequency domain resource offset in the first parameter configuration is determined based on the second indication information.

The terminal device determines the time-frequency resource position of the first CORESET based on the first parameter configuration in the following several optional manners:

The first CORESET is a CORESET determined based on a CORESET of 24 RBs, or the first CORESET is a CORESET obtained after a CORESET of 24 RBs is punctured. FIG. 16 is a diagram of a puncturing manner. In a specific puncturing manner, that a bandwidth of a CORESET corresponding to the first parameter configuration is 15 RBs is used as an example. The first CORESET is 15 RBs with lowest frequencies in a CORESET of 24 RBs, or the first CORESET is a CORESET obtained after 9 RBs with highest frequencies in a CORESET of 24 RBs are punctured (or removed). Optionally, the CORESET of 24 RBs is a non-interleaved CORESET obtained according to the foregoing CORESET-related descriptions or in another manner, or an obtained interleaved CORESET whose quantity R of interleaved rows is equal to 2. In another specific puncturing manner, that a bandwidth of a CORESET corresponding to the first parameter configuration is 15 RBs is used as an example. The first CORESET is 15 RBs with highest frequencies in a CORESET of 24 RBs, or the first CORESET is a CORESET obtained after 9 RBs with lowest frequencies in a CORESET of 24 RBs are punctured (or removed). Optionally, the CORESET of 24 RBs is a non-interleaved CORESET obtained according to the foregoing CORESET-related descriptions or in another manner, or an obtained interleaved CORESET whose quantity R of interleaved rows is equal to 2. When the bandwidth of the CORESET corresponding to the first parameter configuration is 20 RBs, a puncturing manner is the same. Details are not described herein again. For related descriptions of puncturing, refer to the content in the foregoing embodiment.

For example, when the value of the second indication information is 0 or is within the range from 0 to 11, the definition of the frequency domain resource offset in the first parameter configuration is the first definition; or when the value of the second indication information is 1 or is within the range from 12 to 23, the definition of the frequency domain resource offset in the first parameter configuration is the second definition. Correspondingly, a table corresponding to the K parameter configurations may be Table 5.

Table 5 shows a possible example of the table corresponding to the K parameter configurations. Rows 6 to 9 in Table 5 correspond to the non-interleaved manner, or parameter configurations whose index values are 6 to 9 in Table 5 correspond to the non-interleaved manner. Optionally, Table 5 is used for a channel bandwidth greater than or equal to 3 MHz. Optionally, Table 5 is used for a CORESET #0. Optionally, Table 5 is used when a subcarrier spacing of an SSB is 15 kHz and a subcarrier spacing of a PDCCH is 15 kHz. For example, the table can be named "Set of resource blocks and slot symbols of CORESET for Type0-PDCCH search space set when {SS/PBCH block, PDCCH} SCS is {15, 15} kHz for frequency bands with minimum channel bandwidth 3 MHz. Non-interleaved CCE-to-REG mapping applies for entries 6 to 9".

Table 5

| Index value | Multiplexing mode | Quantity of RBs | Quantity of time domain symbols | Frequency domain resource offset |
|---|---|---|---|---|
| 0 | 1 | 12 | 2 | 0 |
| 1 | 1 | 12 | 3 | 0 |
| 2 | 1 | 24 | 2 | 0 |
| 3 | 1 | 24 | 3 | 0 |
| 4 | 1 | 24 | 2 | 2 |
| 5 | 1 | 24 | 3 | 2 |
| 6 | 1 | 24 | 2 | 0 |
| 7 | 1 | 24 | 3 | 0 |
| 8 | 1 | 24 | 2 | 2 |
| 9 | 1 | 24 | 3 | 2 |
| 10 | Reserved | | | |
| 11 | | | | |
| 12 | | | | |
| 13 | | | | |
| 14 | | | | |
| 15 | | | | |

For example, when the value of the second indication information is 0 or is within the range from 0 to 11, the value of the frequency domain resource offset in the first parameter configuration is 0 or 2; or when the value of the second indication information is 1 or is within the range from 12 to 23, the value of the frequency domain resource offset in the first parameter configuration is 1 or 3. Correspondingly, the table corresponding to the K parameter configurations may be Table 6. For example, when an index value of one of the K parameter configurations is 2, if the value of the second indication information is 0, a frequency domain resource offset in a parameter configuration corresponding to the index value is 0. Otherwise, that is, the value of the second indication information is 1, the frequency domain resource offset in the parameter configuration corresponding to the index value is 1. For another example, when an index value of one of the K parameter configurations is 4, if the value of the second indication information is 0, a frequency domain resource offset in a parameter configuration corresponding to the index value is 2. Otherwise, that is, the value of the second indication information is 1, the frequency domain resource offset in the parameter configuration corresponding to the index value is 3.

Table 6 shows another possible example of the table corresponding to the K parameter configurations. Rows 6 to 9 in Table 6 correspond to the non-interleaved manner, or parameter configurations whose index values are 6 to 9 in Table 6 correspond to the non-interleaved manner. Optionally, Table 6 is used for a channel bandwidth greater than or equal to 3 MHz. Optionally, Table 6 is used for a CORESET #0. Optionally, Table 6 is used when a subcarrier spacing of an SSB is 15 kHz and a subcarrier spacing of a PDCCH is 15 kHz. For example, the table can be named "Set of resource blocks and slot symbols of CORESET for Type0-PDCCH search space set when {SS/PBCH block, PDCCH} SCS is {15, 15} kHz for frequency bands with minimum channel bandwidth 3 MHz. Non-interleaved CCE-to-REG mapping applies for entries 6 to 9".

Table 6

| Index value | Multiplexing mode | Quantity of RBs | Quantity of time domain symbols | Frequency domain resource offset |
|---|---|---|---|---|
| 0 | 1 | 12 | 2 | 0 |
| 1 | 1 | 12 | 3 | 0 |
| 2 | 1 | 24 | 2 | 0 if $\overline{a}_{\overline{A}+5}$=0, else 1 |
| 3 | 1 | 24 | 3 | 0 if $\overline{a}_{\overline{A}+5}$=0, else 1 |
| 4 | 1 | 24 | 2 | 2 if $\overline{a}_{\overline{A}+5}$=0, else 3 |
| 5 | 1 | 24 | 3 | 2 if $\overline{a}_{\overline{A}+5}$=0, else 3 |
| 6 | 1 | 24 | 2 | 0 if $\overline{a}_{\overline{A}+5}$=0, else 1 |
| 7 | 1 | 24 | 3 | 0 if $\overline{a}_{\overline{A}+5}$=0, else 1 |
| 8 | 1 | 24 | 2 | 2 if $\overline{a}_{\overline{A}+5}$=0, else 3 |
| 9 | 1 | 24 | 3 | 2 if $\overline{a}_{\overline{A}+5}$=0, else 3 |
| 10 | Reserved | | | |
| 11 | | | | |
| 12 | | | | |
| 13 | | | | |
| 14 | | | | |
| 15 | | | | |

For example, when the value of the second indication information is 0 or is within the range from 0 to 11, the value of the quantity of RBs in the first parameter configuration is 12; or when the value of the second indication information is 1 or is within the range from 12 to 23, the value of the quantity of RBs in the first parameter configuration is 24. Correspondingly, the table corresponding to the K parameter configurations may be Table 7. For example, when an index value of one of the K parameter configurations is 0, if the value of the second indication information is 0, a quantity of RBs in a parameter configuration corresponding to the index value is 12. Otherwise, that is, the value of the second indication information is 1, the quantity of RBs in the parameter configuration corresponding to the index value is 24. For another example, when an index value of one of the K parameter configurations is 1, if the value of the second indication information is 0, a quantity of RBs in a parameter configuration corresponding to the index value is 12. Otherwise, that is, the value of the second indication information is 1, the quantity of RBs in the parameter configuration corresponding to the index value is 24.

Table 7 shows still another possible example of the table corresponding to the K parameter configurations. Rows 8 to 15 in Table 5 correspond to the non-interleaved manner, or parameter configurations whose index values are 8 to 15 in Table 7 correspond to the non-interleaved manner. Optionally, Table 5 is used for a channel bandwidth greater than or equal to 3 MHz. Optionally, Table 5 is used for a CORESET #0. Optionally, Table 5 is used when a subcarrier spacing of an SSB is 15 kHz and a subcarrier spacing of a PDCCH is 15 kHz. For example, the table can be named "Set of resource blocks and slot symbols of CORESET for Type0-PDCCH search space set when {SS/PBCH block, PDCCH} SCS is {15, 15} kHz for frequency bands with minimum channel bandwidth 3 MHz. Non-interleaved CCE-to-REG mapping applies for entries 6 to 13".

Table 7

| Index value | Multiplexing mode | Quantity of RBs | Quantity of time domain symbols | Frequency domain resource offset |
|---|---|---|---|---|
| 0 | 1 | 12 if $\overline{a}_{\overline{A}+5}$=0, else 24 | 2 | 0 |
| 1 | 1 | 12 if $\overline{a}_{\overline{A}+5}$=0, else 24 | 3 | 0 |
| 2 | 1 | 24 | 2 | 1 |

(continued)

| Index value | Multiplexing mode | Quantity of RBs | Quantity of time domain symbols | Frequency domain resource offset |
|---|---|---|---|---|
| 3 | 1 | 24 | 2 | 2 |
| 4 | 1 | 24 | 2 | 3 |
| 5 | 1 | 24 | 3 | 1 |
| 6 | 1 | 24 | 3 | 2 |
| 7 | 1 | 24 | 3 | 3 |
| 8 | 1 | 24 | 2 | 0 |
| 9 | 1 | 24 | 2 | 1 |
| 10 | 1 | 24 | 2 | 2 |
| 11 | 1 | 24 | 2 | 3 |
| 12 | 1 | 24 | 3 | 0 |
| 13 | 1 | 24 | 3 | 1 |
| 14 | 1 | 24 | 3 | 2 |
| 15 | 1 | 24 | 3 | 3 |

It should be noted that, the determining condition $\overline{a}_{\overline{A}+5}=0$ in Table 5, Table 6, and Table 7 may also be replaced with $K_{SSB}<12$, $0 \le K_{SSB}<11$, and $\overline{a}_{\overline{A}+5}=1$.

In this embodiment of this application, the first indication information is sent to the terminal device to indicate the first parameter configuration in the K parameter configurations, and the time-frequency resource position of the first CORESET is determined based on the first parameter configuration, so that signaling overheads are reduced.

It may be understood that, in the foregoing method embodiments, methods and operations implemented by the terminal device may alternatively be implemented by a component (for example, a chip or a circuit) that can be used in the terminal device, and methods and operations implemented by the network device may alternatively be implemented by a component (for example, a chip or a circuit) that can be used in the network device.

In embodiments of this application, the terminal device or the network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation. An example in which each functional module is obtained through division based on each corresponding function is used below for description.

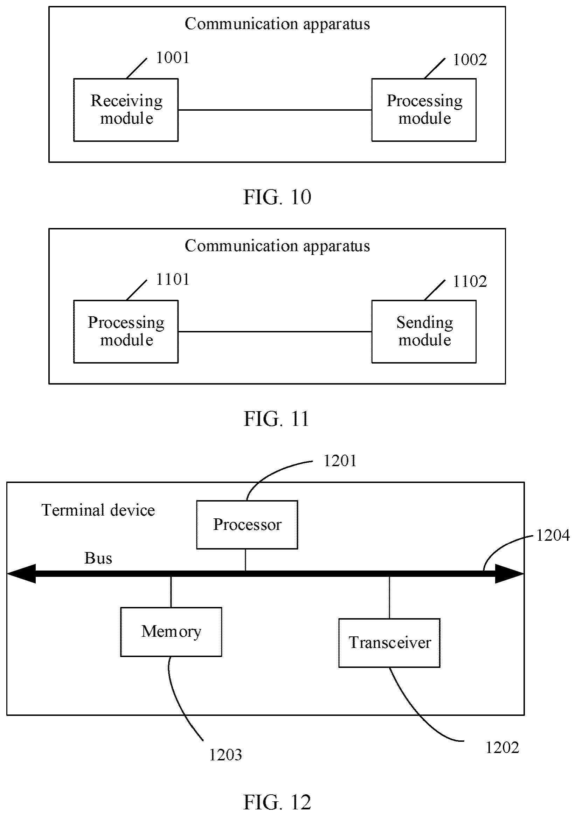

The foregoing describes in detail methods provided in embodiments of this application with reference to FIG. 5, FIG. 7, FIG. 14, and FIG. 15. The following describes in detail communication apparatuses provided in embodiments of this application with reference to FIG. 10 and FIG. 11. It should be understood that descriptions of apparatus embodiments correspond to the descriptions of the method embodiments. Therefore, for content that is not described in detail, refer to the foregoing method embodiments. For brevity, details are not described herein again.

FIG. 10 is a diagram of a structure of a communication apparatus according to an embodiment of this application. The communication apparatus may include a receiving module 1001 and a processing module 1002. The receiving module 1001 may communicate with the outside, and the processing module 1002 is configured to perform processing, for example, perform a PDCCH mapping operation. The receiving module 1001 may also be referred to as a communication interface, a transceiver unit, or a transceiver module. The processing module 1002 may be configured to perform an action performed by the terminal device in the method embodiments.

In a possible design, the communication apparatus may implement steps or procedures performed by the terminal device corresponding to the method embodiments. For example, the communication apparatus may be a terminal device, or a chip or a circuit configured in the terminal device.

In an embodiment:

The receiving module 1001 is configured to receive a physical downlink control channel PDCCH from a network device, where all control channel elements CCEs included in the PDCCH are within a first bandwidth range, the first bandwidth range is a transmission bandwidth supported by the network device, and the first bandwidth range is less than 24 resource blocks RBs.

The processing module 1002 is configured to obtain downlink control information based on the PDCCH.

Optionally, the PDCCH corresponds to X CCEs, the X CCEs are X consecutive CCEs starting from a first CCE in a frequency increasing direction, and X is an aggregation level of the PDCCH.

Optionally, the PDCCH corresponds to X CCEs, the X CCEs are determined starting from a first CCE in ascending order of CCE numbers, the X CCEs do not include a CCE outside the first bandwidth range, and X is an aggregation level of the PDCCH.

Optionally, the PDCCH corresponds to at least one CCE combination, each of the at least one CCE combination includes X CCEs, the X CCEs are all within the first bandwidth range, and X is an aggregation level of the PDCCH.

Optionally, the receiving module 1001 is further configured to receive indication information from the network device, where the indication information indicates a manner of determining the PDCCH and the CCE.

Optionally, the indication information is determined based on a synchronization signal.

Optionally, X is 4, 5, 7, or 8.

Optionally, the physical downlink control channel PDCCH is included in a control resource set 0.

In another embodiment:

The receiving module 1001 is configured to receive a physical downlink control channel PDCCH from a network device, where all control channel elements CCEs included in the PDCCH are within a first bandwidth range, the first bandwidth range is a transmission bandwidth supported by the network device, and the first bandwidth range is less than 24 resource blocks RBs.

The processing module 1002 is configured to obtain downlink control information based on the PDCCH.

Optionally, the PDCCH corresponds to X CCEs, the X CCEs are X consecutive CCEs starting from a first CCE in a frequency increasing direction, and X is an aggregation level of the PDCCH.

Optionally, the PDCCH corresponds to X CCEs, the X CCEs are determined starting from a first CCE in ascending order of CCE numbers, the X CCEs do not include a CCE outside the first bandwidth range, and X is an aggregation level of the PDCCH.

Optionally, the PDCCH corresponds to at least one CCE combination, each of the at least one CCE combination includes X CCEs, the X CCEs are all within the first bandwidth range, and X is an aggregation level of the PDCCH.

Optionally, the receiving module 1001 is further configured to receive indication information from the network device, where the indication information indicates a manner of determining the PDCCH and the CCE.

Optionally, the indication information is determined based on a synchronization signal.

Optionally, X is 4, 5, 7, or 8.

Optionally, the CCE corresponding to the PDCCH is included in a control resource set 0.

In another embodiment:

The receiving module 1001 is configured to receive first indication information from a network device, where the first indication information indicates a first parameter configuration, the first parameter configuration is one of K parameter configurations, and K is a positive integer.

The processing module 1002 is configured to determine a time-frequency resource position of a first control resource set CORESET based on the first parameter configuration.

Optionally, any one of the K parameter configurations includes one or more of the following parameters: a quantity of resource blocks RBs, a frequency domain resource offset, a quantity of time domain symbols, a mapping manner, a puncturing manner, and a multiplexing mode.

Optionally, the receiving module 1001 is further configured to receive second indication information from the network device, where the second indication information indicates the first parameter configuration; and

the processing module 1002 is further configured to determine the first parameter configuration based on the first indication information and the second indication information.

Optionally, when a value of the second indication information is 0 or is within a range from 0 to 11, a value of a frequency domain resource offset in the first parameter configuration is 0 or 2; or when a value of the second indication information is 1 or is within a range from 12 to 23, a value of a frequency domain resource offset in the first parameter configuration is 1 or 3.

Optionally, when a value of the second indication information is 0 or is within a range from 0 to 11, a definition of a frequency domain resource offset in the first parameter configuration is a first definition; or when a value of the second indication information is 1 or is within a range from 12 to 23, a definition of a frequency domain resource offset in the first parameter configuration is a second definition.

The first definition is an offset between a smallest RB index of the first CORESET and a smallest RB index of a pre- or post-puncturing synchronization signal and physical broadcast channel block SSB, and the second definition is an offset between a $2^{nd}$ RB index of the first CORESET and the smallest RB index of the pre- or post-puncturing SSB or the offset between the smallest RB index of the first CORESET and the smallest RB index of the pre- or post-puncturing SSB minus 1.

Optionally, when a value of the second indication information is 0 or is within a range from 0 to 11, a quantity of RBs in the first parameter configuration is 12; or when a value of the second indication information is 1 or is within a range from 12 to 23, a quantity of RBs in the first parameter configuration is 15.

Optionally, the second indication information is carried in a physical broadcast channel PBCH physical layer additional bit, or the second indication information is carried in a master information block MIB and a PBCH physical layer additional bit.

Optionally, the first CORESET is 15 RBs with lowest frequencies in a CORESET of 24 RBs, the first CORESET is a CORESET obtained after 9 RBs with highest frequencies in a CORESET of 24 RBs are punctured, the first CORESET is 15 RBs with highest frequencies in a CORESET of 24 RBs, or the first CORESET is a CORESET obtained after 9 RBs with lowest frequencies in a CORESET of 24 RBs are punctured.

Optionally, K is 10, 11, 12, 13, 14, 15, or 16.

Optionally, the K parameter configurations are used for CORESETs.

Optionally, the frequency domain resource offset is a frequency domain resource offset of a CORESET relative to an SSB.

Optionally, the quantity of time domain symbols is a quantity of symbols occupied by a CORESET in time domain.

Optionally, the mapping manner is an interleaved manner or a non-interleaved manner. The mapping manner is a manner of CCE-to-REG mapping in a CORESET.

Optionally, the multiplexing mode is a multiplexing mode between an SSB and a CORESET.

Optionally, the puncturing manner is a puncturing manner for a CORESET or a CORESET #0.

Optionally, bandwidths of the CORESETs corresponding to the K parameter configurations are less than 24 RBs. Specifically, the bandwidths of the CORESETs corresponding to the K parameter configurations include one or more of 12 RBs and 15 RBs. For example, the bandwidths of the CORESETs corresponding to the K parameter configurations include 12 RBs and 15 RBs, or 15 RBs.

Optionally, a bandwidth of a CORESET corresponding to a parameter configuration in which a quantity of RBs is 24 RBs in the K parameter configurations is 15 RBs.

Optionally, frequency domain resource offsets corresponding to the K parameter configurations each are a value in a first value set, and a quantity of values in the first value set is greater than 3.

It should be noted that, for implementation of the modules, correspondingly refer to corresponding descriptions of the method embodiments shown in FIG. 5, FIG. 7, FIG. 14, and FIG. 15. The modules perform the methods and functions performed by the terminal device in the foregoing embodiments.

FIG. 11 is a diagram of a structure of another communication apparatus according to an embodiment of this application. The communication apparatus may include a processing module 1101 and a sending module 1102. The sending module 1102 may communicate with the outside, and the processing module 1101 is configured to perform processing, for example, determine a PDCCH. The sending module 1102 may also be referred to as a communication interface, a transceiver unit, or a transceiver module. The processing module 1101 may be configured to perform an action performed by the network device in the method embodiments.

In a possible design, the communication apparatus may implement steps or procedures performed by the network device corresponding to the method embodiments. For example, the communication apparatus may be a network device, or a chip or a circuit configured in the network device.

In an embodiment:

The processing module 1101 is configured to determine a physical downlink control channel PDCCH, where all control channel elements CCEs included in the PDCCH are within a first bandwidth range, the first bandwidth range is a transmission bandwidth supported by the network device, and the first bandwidth range is less than 24 resource blocks RBs.

The sending module 1102 is configured to send the PDCCH to a terminal device, where the PDCCH carries downlink control information.

Optionally, the PDCCH corresponds to X CCEs, the X CCEs are X consecutive CCEs starting from a first CCE in a frequency increasing direction, and X is an aggregation level of the PDCCH.

Optionally, the PDCCH corresponds to X CCEs, the X CCEs are determined starting from a first CCE in ascending order of CCE numbers, the X CCEs do not include a CCE outside the first bandwidth range, and X is an aggregation level of the PDCCH.

Optionally, the PDCCH corresponds to at least one CCE combination, each of the at least one CCE combination includes X CCEs, the X CCEs are all within the first bandwidth range, and X is an aggregation level of the PDCCH.

Optionally, the sending module 1102 is further configured to send indication information to the terminal device, where the indication information indicates a manner of determining the PDCCH and the CCE.

Optionally, the indication information is determined based on a synchronization signal.

Optionally, X is 4, 5, 7, or 8.

Optionally, the CCE corresponding to the PDCCH is included in a control resource set 0.

In another embodiment:

The processing module 1101 is configured to determine a physical downlink control channel PDCCH, where control channel elements CCEs included in the PDCCH include a CCE that exceeds a first bandwidth range and a CCE within the first bandwidth range, downlink control information corresponding to the PDCCH is carried in the CCE within the first bandwidth range, the first bandwidth range is a transmission bandwidth supported by the network device, and the first bandwidth range is less than 24 resource blocks RBs.

The sending module 1102 is configured to send the PDCCH to a terminal device, where the PDCCH carries the downlink control information.

Optionally, an encoded bit of the downlink control information is mapped to a time-frequency resource unit corresponding to X-M CCEs, where X is an aggregation level of the PDCCH, M is a quantity of CCEs that exceed the first bandwidth range, and M is an integer greater than or equal to 0.

Optionally, the processing module 1101 is further configured to determine that a reference signal received measurement result of the terminal device is greater than a first threshold, and/or a ratio of a quantity of CCEs within the first bandwidth range to a quantity of CCEs corresponding to the PDCCH is greater than a second threshold.

Optionally, the PDCCH corresponds to X CCEs, the X CCEs are X consecutive CCEs starting from a first CCE in a frequency increasing direction, and X is an aggregation level of the PDCCH.

Optionally, the sending module 1102 is further configured to send indication information to the terminal device, where the indication information indicates a manner of determining the PDCCH and the CCE.

Optionally, the indication information is determined based on a synchronization signal.

Optionally, X is 4, 5, 7, or 8.

Optionally, the physical downlink control channel PDCCH is included in a control resource set 0.

In another embodiment:

The processing module 1101 is configured to determine a first parameter configuration, where the first parameter configuration is one of K parameter configurations, the first parameter configuration is used to determine a time-frequency resource position of a first control resource set CORESET, and K is a positive integer.

The sending module 1102 is configured to send first indication information to a terminal device, where the first indication information indicates the first parameter configuration.

Optionally, any one of the K parameter configurations includes one or more of the following parameters: a quantity of resource blocks RBs, a frequency domain resource offset, a quantity of time domain symbols, a mapping manner, a puncturing manner, and a multiplexing mode.

Optionally, the sending module 1102 is further configured to send second indication information to the terminal device, where the second indication information indicates the first parameter configuration.

Optionally, when a value of the second indication information is 0 or is within a range from 0 to 11, a value of a frequency domain resource offset in the first parameter configuration is 0 or 2; or when a value of the second indication information is 1 or is within a range from 12 to 23, a value of a frequency domain resource offset in the first parameter configuration is 1 or 3.

Optionally, when a value of the second indication information is 0 or is within a range from 0 to 11, a definition of a frequency domain resource offset in the first parameter configuration is a first definition; or when a value of the second indication information is 1 or is within a range from 12 to 23, a definition of a frequency domain resource offset in the first parameter configuration is a second definition.

The first definition is an offset between a smallest RB index of the first CORESET and a smallest RB index of a pre- or post-puncturing synchronization signal and physical broadcast channel block SSB, and the second definition is an offset between a $2^{nd}$ RB index of the first CORESET and the smallest RB index of the pre- or post-puncturing SSB or the offset between the smallest RB index of the first CORESET and the smallest RB index of the pre- or post-puncturing SSB minus 1.

Optionally, when a value of the second indication information is 0 or is within a range from 0 to 11, a quantity of RBs in the first parameter configuration is 12; or when a value of the second indication information is 1 or is within a range from 12 to 23, a quantity of RBs in the first parameter configuration is 15.

Optionally, the second indication information is carried in a PBCH physical layer additional bit, or the second indication information is carried in a MIB and a PBCH physical layer additional bit.

Optionally, the first CORESET is 15 RBs with lowest frequencies in a CORESET of 24 RBs, the first CORESET is a CORESET obtained after 9 RBs with highest frequencies in a CORESET of 24 RBs are punctured, the first CORESET is 15 RBs with highest frequencies in a CORESET of 24 RBs, or the first CORESET is a CORESET obtained after 9 RBs with lowest frequencies in a CORESET of 24 RBs are punctured.

Optionally, K is 10, 11, 12, 13, 14, 15, or 16.

Optionally, the K parameter configurations are used for CORESETs.

Optionally, the frequency domain resource offset is a frequency domain resource offset of a CORESET relative to an SSB.

Optionally, the quantity of time domain symbols is a quantity of symbols occupied by a CORESET in time domain.

Optionally, the mapping manner is an interleaved manner or a non-interleaved manner. The mapping manner is a manner of CCE-to-REG mapping in a CORESET.

Optionally, the multiplexing mode is a multiplexing mode between an SSB and a CORESET.

Optionally, the puncturing manner is a puncturing manner for a CORESET or a CORESET #0.

Optionally, bandwidths of the CORESETs corresponding to the K parameter configurations are less than 24 RBs. Specifically, the bandwidths of the CORESETs corresponding to the K parameter configurations include one or more of 12 RBs and 15 RBs. For example, the bandwidths of the CORESETs corresponding to the K parameter configurations include 12 RBs and 15 RBs, or 15 RBs.

Optionally, a bandwidth of a CORESET corresponding to a parameter configuration in which a quantity of RBs is 24 RBs in the K parameter configurations is 15 RBs.

Optionally, frequency domain resource offsets corresponding to the K parameter configurations each are a value in a first value set, and a quantity of values in the first value set is greater than 3.

It should be noted that, for implementation of the modules, correspondingly refer to corresponding descriptions of the method embodiments shown in FIG. 5, FIG. 7, FIG. 14, and FIG. 15. The modules perform the methods and functions performed by the network device in the foregoing embodiments.

FIG. 12 is a diagram of a structure of a terminal device according to an embodiment of this application. The terminal device may be used in the systems shown in FIG. 1a and FIG. 1b, to perform functions of the terminal device in the method embodiments, or implement steps or procedures performed by the terminal device in the method embodiments.

As shown in FIG. 12, the terminal device includes a processor 1201 and a transceiver 1202. Optionally, the terminal device further includes a memory 1203. The processor 1201, the transceiver 1202, and the memory 1203 may communicate with each other via an internal connection path, to transfer a control signal and/or a data signal. The memory 1203 is configured to store a computer program. The processor 1201 is configured to invoke the computer program from the memory 1203 and run the computer program, to control the transceiver 1202 to receive/send a signal. Optionally, the terminal device may further include an antenna, configured to send, by using a radio signal, uplink data or uplink control signaling that is output by the transceiver 1202.

The processor 1201 and the memory 1203 may be integrated into one processing apparatus. The processor 1201 is configured to execute program code stored in the memory 1203 to implement the foregoing functions. During specific implementation, the memory 1203 may alternatively be integrated into the processor 1201, or may be independent of the processor 1201. The processor 1201 may correspond to the processing module in FIG. 10.

The transceiver 1202 may correspond to the receiving module in FIG. 10, and may also be referred to as a transceiver unit or a transceiver module. The transceiver 1202 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the terminal device shown in FIG. 12 can implement the processes related to the terminal device in the method embodiments of FIG. 5, FIG. 7, FIG. 14, and FIG. 15. Operations and/or functions of the modules in the terminal device are separately for implementing corresponding procedures in the method embodiments. For details, refer to the descriptions in the method embodiments. To avoid repetition, detailed descriptions are properly omitted herein.

The processor 1201 may be configured to perform an action that is implemented inside the terminal device and that is described in the method embodiments. The transceiver 1202 may be configured to perform a sending action of the terminal device to the network device or a receiving action of the terminal device from the network device in the method embodiments. For details, refer to the descriptions in the method embodiments. Details are not described herein again.

The processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor 1201 may alternatively be a combination of processors implementing a computing function, for example, a combination of one or more microprocessors, or a combination of a digital signal processor and a microprocessor. A communication bus 1204 may be a peripheral component interconnect PCI bus, an extended industry standard architecture EISA bus, or the like. Buses may be classified into an address bus, a data bus, a control bus, and the like. For ease of representation, only one thick line is used to represent the bus in FIG. 12, but this does not mean that there is only one bus or only one type of bus. The communication bus 1204 is configured to implement connection and communication between these components. The transceiver 1202 in this embodiment of this application is configured to perform signaling or data communication with another node device. The memory 1203 may include a volatile memory, for example, a nonvolatile dynamic random access memory (nonvolatile random access memory, NVRAM), a phase-change random access memory (phase-change RAM, PRAM), or a magnetoresistive random access memory (magnetoresistive RAM, MRAM). The memory may further include a nonvolatile memory, for example, at least one magnetic disk storage device, an electrically erasable programmable read-only memory (electrically erasable programmable read-only memory, EEPROM), a flash memory device such as a NOR flash memory (NOR flash memory) or a NAND flash memory (NAND flash memory), or a semiconductor device such as a solid state disk (solid state disk, SSD). Optionally, the memory 1203 may alternatively be at least one storage apparatus far away from the processor 1201. Optionally, the memory 1203 may further store a group of computer program code or configuration information. Optionally, the processor 1201 may further execute a program stored in the memory 1203. The processor may cooperate with the memory and the transceiver to perform any method and function of the terminal device in the foregoing embodiments of this application.

FIG. 13 is a diagram of a structure of a network device according to an embodiment of this application. The network device may be used in the systems shown in FIG. 1a and FIG. 1b, to perform functions of the network device in the method embodiments, or implement steps or procedures performed by the network device in the method embodiments.

As shown in FIG. 13, the network device includes a processor 1301 and a transceiver 1302. Optionally, the network device further includes a memory 1303. The processor 1301, the transceiver 1302, and the memory 1303 may communicate with each other via an internal connection path, to transfer a control signal and/or a data signal. The memory 1303 is configured to store a computer program. The processor 1301 is configured to invoke the computer program from the memory 1303 and run the computer program, to control the transceiver 1302 to receive/send a signal. Optionally, the network device may further include an antenna, configured to send, by using a radio signal, uplink data or uplink control signaling that is output by the transceiver 1302.

The processor 1301 and the memory 1303 may be integrated into one processing apparatus. The processor 1301 is configured to execute program code stored in the memory 1303 to implement the foregoing functions. During specific implementation, the memory 1303 may alternatively be integrated into the processor 1301, or may be independent of the processor 1301. The processor 1301 may correspond to the processing module in FIG. 11.

The transceiver 1302 may correspond to the sending module in FIG. 11, and may also be referred to as a transceiver unit or a transceiver module. The transceiver 1302 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the network device shown in FIG. 13 can implement the processes related to the network device in the method embodiments of FIG. 5, FIG. 7, FIG. 14, and FIG. 15. Operations and/or functions of the modules in the network device are separately for implementing corresponding procedures in the method embodiments. For details, refer to the descriptions in the method embodiments. To avoid repetition, detailed descriptions are properly omitted herein.

The processor 1301 may be configured to perform an action that is implemented inside the network device and that is described in the method embodiments. The transceiver 1302 may be configured to perform a sending action of the network device to the terminal device or a receiving action of the network device from the terminal device in the method embodiments. For details, refer to the descriptions in the method embodiments. Details are not described herein again.

The processor 1301 may be processors of various types mentioned above. A communication bus 1304 may be a peripheral component interconnect PCI bus, an extended industry standard architecture EISA bus, or the like. Buses may be classified into an address bus, a data bus, a control bus, and the like. For ease of representation, only one thick line is used to represent the bus in FIG. 13, but this does not mean that there is only one bus or only one type of bus. The communication bus 1304 is configured to implement connection and communication between these components. The transceiver 1302 of the device in this embodiment of this application is configured to perform signaling or data communication with another device. The memory 1303 may be memories of various types mentioned above. Optionally, the memory 1303 may alternatively be at least one storage apparatus far away from the processor 1301. The memory 1303 stores a group of computer program code or configuration information, and the processor 1301 executes a program in the memory 1303. The processor may cooperate with the memory and the transceiver to perform any method and function of the network device in the foregoing embodiments of this application.

An embodiment of this application further provides a chip system. The chip system includes a processor, configured to support a terminal device or a network device in implementing a function in any one of the foregoing embodiments, for example, generating or processing SDT data in the foregoing methods. In a possible design, the chip system may further include a memory, and the memory is configured to store program instructions and data that are necessary for the terminal device or the network device. The chip system may include a chip, or may include a chip and another discrete component. Input and output of the chip system respectively correspond to receiving and sending operations of the terminal device or the network device in the method embodiments.

It should be understood that the communication apparatus may be a chip. For example, the communication apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

It should be noted that, the processor in embodiments of this application may be an integrated circuit chip, and has a signal processing capability. In an implementation process, steps of the communication system may be completed by using a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the method in combination with hardware of the processor.

According to the methods provided in embodiments of this application, this application further provides a computer program product. The computer program product includes a computer program. When the computer program is run on a computer, the computer is enabled to perform the method in any one of the embodiments shown in FIG. 5, FIG. 7, FIG. 14, and FIG. 15.

According to the methods provided in embodiments of this application, this application further provides a computer-readable medium. The computer-readable storage medium stores a computer program. When program code is run on a computer, the computer is enabled to perform the method in any one of the embodiments shown in FIG. 5, FIG. 7, FIG. 14, and FIG. 15.

According to the methods provided in embodiments of this application, this application further provides a communication system. The communication system includes one or more terminal devices and one or more network devices that are described above.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

The access network device and the terminal device in the foregoing apparatus embodiments correspond to the access network device or the terminal device in the method embodiments, and corresponding modules or units perform corresponding steps. For example, a receiving module and a sending module (a transceiver) perform receiving or sending steps in the method embodiments, and a step other than sending and receiving steps may be performed by a processing module (a processor). For a function of a specific module, refer to a corresponding method embodiment. There may be one or more processors.

Terms such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may perform communication by using a local process and/or a remote process and based on a signal with one or more data packets (for example, data from two components interacting with another component in a local system, a distributed system, and/or across a network such as the internet interacting with another system by using the signal).

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional modules in embodiments of this application may be integrated into one processing module, each of the modules may exist alone physically, or two or more modules may be integrated into one module.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, an access network device, or the like) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   receiving first indication information from a network device, wherein the first indication information indicates a first parameter configuration, the first parameter configuration is one of K parameter configurations, and K is a positive integer; and
   determining a time-frequency resource position of a first control resource set CORESET based on the first parameter configuration.

2. The method according to claim 1, wherein any one of the K parameter configurations comprises one or more of the following parameters: a quantity of resource blocks RBs, a frequency domain resource offset, a quantity of time domain symbols, a mapping manner, a puncturing manner, and a multiplexing mode.

3. The method according to claim 1 or 2, wherein the method further comprises:

   receiving second indication information from the network device, wherein the second indication information indicates a quantity of RBs or a frequency domain resource offset in the first parameter configuration; and
   determining the first parameter configuration based on the first indication information and the second indication information.

4. The method according to claim 3, wherein when a value of the second indication information is 0 or is within a range from 0 to 11, a value of the frequency domain resource offset in the first parameter configuration is 0 or 2; or when a value of the second indication information is 1 or is within a range from 12 to 23, a value of the frequency domain resource offset in the first parameter configuration is 1 or 3.

5. The method according to claim 3, wherein when a value of the second indication information is 0 or is within a range from 0 to 11, a definition of the frequency domain resource offset in the first parameter configuration is a first definition; or when a value of the second indication information is 1 or is within a range from 12 to 23, a definition of the frequency domain resource offset in the first parameter configuration is a second definition, wherein
the first definition is an offset between a smallest RB index of the first CORESET and a smallest RB index of a pre- or post-puncturing synchronization signal and physical broadcast channel block SSB, and the second definition is an offset between a $2^{nd}$ RB index of the first CORESET and the smallest RB index of the pre- or post-puncturing SSB or the offset between the smallest RB index of the first CORESET and the smallest RB index of the pre- or post-puncturing SSB minus 1.

6. The method according to claim 3, wherein when a value of the second indication information is 0 or is within a range from 0 to 11, the quantity of RBs in the first parameter configuration is 12; or when a value of the second indication information is 1 or is within a range from 12 to 23, the quantity of RBs in the first parameter configuration is 15.

7. The method according to any one of claims 3 to 6, wherein the second indication information is carried in a physical broadcast channel PBCH physical layer additional bit, or the second indication information is carried in a master information block MIB and a PBCH physical layer additional bit.

8. The method according to any one of claims 1 to 7, wherein the first CORESET is 15 RBs with lowest frequencies in a CORESET of 24 RBs, the first CORESET is a CORESET obtained after 9 RBs with highest frequencies in a CORESET of 24 RBs are punctured, the first CORESET is 15 RBs with highest frequencies in a CORESET of 24 RBs, or the first CORESET is a CORESET obtained after 9 RBs with lowest frequencies in a CORESET of 24 RBs are punctured.

9. A communication method, wherein the method comprises:

   determining a first parameter configuration, wherein the first parameter configuration is one of K parameter configurations, the first parameter configuration is used to determine a time-frequency resource position of a first control resource set CORESET, and K is a positive integer; and
   sending first indication information to a terminal device, wherein the first indication information indicates the first parameter configuration.

10. The method according to claim 9, wherein any one of the K parameter configurations comprises one or more of the following parameters: a quantity of resource blocks RBs, a frequency domain resource offset, a quantity of time domain symbols, a mapping manner, a puncturing manner, and a multiplexing mode.

11. The method according to claim 9 or 10, wherein the method further comprises:
   sending second indication information to the terminal device, wherein the second indication information indicates a quantity of RBs or a frequency domain resource offset in the first parameter configuration.

12. The method according to claim 11, wherein when a value of the second indication information is 0 or is within a range from 0 to 11, a value of the frequency domain resource offset in the first parameter configuration is 0 or 2; or when a value of the second indication information is 1 or is within a range from 12 to 23, a value of the frequency domain resource offset in the first parameter configuration is 1 or 3.

13. The method according to claim 11, wherein when a value of the second indication information is 0 or is within a range from 0 to 11, a definition of the frequency domain resource offset in the first parameter configuration is a first definition; or when a value of the second indication information is 1 or is within a range from 12 to 23, a definition of the frequency domain resource offset in the first parameter configuration is a second definition, wherein
the first definition is an offset between a smallest RB index of the first CORESET and a smallest RB index of a pre- or post-puncturing synchronization signal and physical broadcast channel block SSB, and the second definition is an offset between a $2^{nd}$ RB index of the first CORESET and the smallest RB index of the pre- or post-puncturing SSB or the offset between the smallest RB index of the first CORESET and the smallest RB index of the pre- or post-puncturing SSB minus 1.

14. The method according to claim 11, wherein when a value of the second indication information is 0 or is within a range from 0 to 11, the quantity of RBs in the first parameter configuration is 12; or when a value of the second indication information is 1 or is within a range from 12 to 23, the quantity of RBs in the first parameter configuration is 15.

**15.** The method according to any one of claims 11 to 14, wherein the second indication information is carried in a PBCH physical layer additional bit, or the second indication information is carried in a MIB and a PBCH physical layer additional bit.

**16.** The method according to any one of claims 9 to 15, wherein the first CORESET is 15 RBs with lowest frequencies in a CORESET of 24 RBs, the first CORESET is a CORESET obtained after 9 RBs with highest frequencies in a CORESET of 24 RBs are punctured, the first CORESET is 15 RBs with highest frequencies in a CORESET of 24 RBs, or the first CORESET is a CORESET obtained after 9 RBs with lowest frequencies in a CORESET of 24 RBs are punctured.

**17.** A communication apparatus, comprising a memory and a processor, wherein the memory is configured to store a computer program; and the processor runs the computer program, to enable the communication apparatus to perform the method according to any one of claims 1 to 8.

**18.** A communication apparatus, comprising a memory and a processor, wherein the memory is configured to store a computer program; and the processor runs the computer program, to enable the communication apparatus to perform the method according to any one of claims 9 to 16.

**19.** A computer-readable storage medium, wherein the computer-readable storage medium stores a computer program; and when the computer program is run on a processor, the method according to any one of claims 1 to 16 is implemented.

FIG. 1a

FIG. 1b

Uplink                                    Downlink

```
        ┌─────┬───────┬─────┐           ┌─────┬───────┬─────┐
        │     │   3   │     │           │     │   3   │     │
        │     │  MHz  │     │           │     │  MHz  │     │
────────┴─────┴───────┴─────┴───────────┴─────┴───────┴─────┴──────
      703    733     736    748       758    788     791    803  f (MHz)
```

```
  ┌───────┬─────────┐             ┌───────┬─────────┐
  │ 5 MHz │         │             │ 5 MHz │         │
──┴───────┴─────────┴─────────────┴───────┴─────────┴───────────
698     703        728           728     758        783        f (MHz)
```

FIG. 2

| 24 RBs | REG bundle 11 | CCE 11 | REG bundle 7 | CCE 7 |
| | REG bundle 10 | CCE 9 | | |
| | REG bundle 9 | CCE 7 | REG bundle 6 | CCE 5 |
| | REG bundle 8 | CCE 5 | REG bundle 5 | CCE 3 |
| | REG bundle 7 | CCE 3 | | |
| | REG bundle 6 | CCE 1 | REG bundle 4 | CCE 1 |
| | REG bundle 5 | CCE 10 | REG bundle 3 | CCE 6 |
| | REG bundle 4 | CCE 8 | | |
| | REG bundle 3 | CCE 6 | REG bundle 2 | CCE 4 |
| | REG bundle 2 | CCE 4 | REG bundle 1 | CCE 2 |
| | REG bundle 1 | CCE 2 | | |
| | REG bundle 0 | CCE 0 | REG bundle 0 | CCE 0 |

Three symbols                          Two symbols

FIG. 3

24 RBs

16 RBs

CCE 11
CCE 9
**CCE 7**
**CCE 5**
CCE 3
CCE 1
CCE 10
CCE 8
CCE 6
CCE 4
CCE 2
CCE 0

Three symbols

CCE 7
CCE 5
**CCE 3**
CCE 1
CCE 6
CCE 4
CCE 2
CCE 0

16 RBs

Two symbols

FIG. 4

Network device

Terminal device

S501: Determine a PDCCH, where all control channel elements CCEs included in the PDCCH are within a first bandwidth range, the first bandwidth range is a transmission bandwidth supported by the network device, and the first bandwidth range is less than 24 resource blocks RBs

S502: PDCCH

S503: Obtain downlink control information based on the PDCCH

FIG. 5

| | | | CCE 11 | | | CCE 7 |
| | | | CCE 9 | | | |
| | | | CCE 7 | | | CCE 5 |
| | | | CCE 5 | | | CCE 3 |
| | | | CCE 3 | | | |
| | | | CCE 1 | | | CCE 1 |
| | | | CCE 10 | | | CCE 6 |
| | | | CCE 8 16 RBs | | | |
16 RBs | | | | CCE 6 | | | CCE 4 |
| | | | CCE 4 | | | CCE 2 |
| | | | CCE 2 | | | |
| | | | CCE 0 | | | CCE 0 |

Three symbols                                    Two symbols

## FIG. 6

```
┌──────────┐                              ┌──────────┐
│ Network  │                              │ Terminal │
│ device   │                              │ device   │
└──────────┘                              └──────────┘
```

S701: Determine a PDCCH, where control channel elements CCEs included in the PDCCH include a CCE that exceeds a first bandwidth range and a CCE within the first bandwidth range, downlink control information corresponding to the PDCCH is carried in the CCE within the first bandwidth range, the first bandwidth range is a transmission bandwidth supported by the network device, and the first bandwidth range is less than 24 resource blocks RBs

S702: PDCCH

S703: Obtain the downlink control information based on the PDCCH

## FIG. 7

FIG. 8

FIG. 9

Communication apparatus

1001

Receiving module

1002

Processing module

FIG. 10

Communication apparatus

1101

Processing module

1102

Sending module

FIG. 11

1201

Terminal device

Processor

1204

Bus

Memory

Transceiver

1203

1202

FIG. 12

1301

Network device

Processor

1304

Bus

Memory

Transceiver

1303

1302

FIG. 13

Network device

Terminal device

S1401: Determine and send control resource set configuration information, where the control resource set configuration information includes a time domain resource and/or a frequency domain resource of a first control resource set

S1402: Send a physical downlink control channel PDCCH on the time domain resource and/or the frequency domain resource of the first control resource set

S1403: Determine the time domain resource and/or the frequency domain resource of the first control resource set based on the control resource set configuration information, and detect the physical downlink control channel PDCCH on the time domain resource and/or the frequency domain resource of the first control resource set

FIG. 14

FIG. 15

Three symbols                    Two symbols

FIG. 16

## INTERNATIONAL SEARCH REPORT

| | International application No. |
|---|---|
| | **PCT/CN2024/074657** |

| | |
|---|---|
| **A.** | **CLASSIFICATION OF SUBJECT MATTER** |
| | H04W 72/231(2023.01)i |

According to International Patent Classification (IPC) or to both national classification and IPC

| | |
|---|---|
| **B.** | **FIELDS SEARCHED** |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; ENTXT; CNKI; 3GPP: 窄带, 专网, 控制资源集, 打孔, 频域, 偏移, 时域, 符号数, 资源块, CORESET, narrow band, puncture, PDCCH, offset, resource block, frequency, time domain, number, RB, index

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2021031390 A1 (HUAWEI TECHNOLOGIES CO., LTD.) 25 February 2021 (2021-02-25) description, page 5, line 11 to page 21, line 17 | 1-4, 6, 7, 9-12, 14, 15, 17-19 |
| Y | WO 2021031390 A1 (HUAWEI TECHNOLOGIES CO., LTD.) 25 February 2021 (2021-02-25) description, page 5, line 11 to page 21, line 17 | 5, 8, 13, 16 |
| Y | US 2022166569 A1 (TELEFONAKTIEBOLAGET LM ERICSSON (PUBL)) 26 May 2022 (2022-05-26) description, paragraphs [0102]-[0110] | 5, 8, 13, 16 |
| X | CN 110603852 A (LG ELECTRONICS INC.) 20 December 2019 (2019-12-20) claims 1-14, and description, paragraphs [0289]-[0293] | 1, 2, 9, 10, 17-19 |
| X | CN 113661764 A (SAMSUNG ELECTRONICS CO., LTD.) 16 November 2021 (2021-11-16) description, paragraphs [0031]-[0049] | 1, 2, 9, 10, 17-19 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 April 2024** | **23 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/074657** |

| Patent document cited in search report | | | Publication date (day/month/year) | Patent family member(s) | Publication date (day/month/year) |
| --- | --- | --- | --- | --- | --- |
| WO | 2021031390 | A1 | 25 February 2021 | None | |
| US | 2022166569 | A1 | 26 May 2022 | None | |
| CN | 110603852 | A | 20 December 2019 | None | |
| CN | 113661764 | A | 16 November 2021 | None | |

Form PCT/ISA/210 (patent family annex) (July 2022)

**REFERENCES CITED IN THE DESCRIPTION**

**Patent documents cited in the description**

- CN 202310165651

- CN 202311058547